# EUROPEAN PATENT APPLICATION

(11) **EP 3 139 605 A1**
(43) Date of publication of application: **08.03.2017**
(21) Application number: 15785284.9
(22) Date of filing: 17.04.2015
(51) Int. Cl.: H04N 19/105, H04N 19/157, H04N 19/176, H04N 19/52, H04N 19/70

(54) **ENCODING METHOD, DECODING METHOD, ENCODING APPARATUS, AND DECODING APPARATUS**

(30) Priority: 28.04.2014 JP 2014093071; 28.05.2014 US 201462003582 P; 05.02.2015 JP 2015021590
(71) Applicant: Panasonic Intellectual Property Corporation of America, Torrance, CA 90503 (US)
(72) Inventor: NAING, Sue Mon Thet, Osaka 540-6207 (JP); LIM, Chong Soon, Osaka 540-6207 (JP); SASAI, Hisao, Osaka 540-6207 (JP); TERADA, Kengo, Osaka 540-6207 (JP); YOSHIKAWA, Satoshi, Osaka 540-6207 (JP)
(74) Representative: Grünecker Patent- und Rechtsanwälte PartG mbB
(86) International application number: PCT/JP2015/002110
(87) International publication number: WO 2015/166639

(57) **Abstract**

A coding method includes a step (S11) of selecting one nearby template from N (N being an integer equal to or greater than 2) nearby templates that are predefined for a target block and represent different regions spatially adjacent to the target block, a step (S12) of deriving a motion vector using a reconstructed image in a region represented by the selected nearby template and a reference picture different from a picture including the target block, a step (S13) of compensating a motion for the target block using the derived motion vector so as to code the target block, and a step (S14) of writing a DMVD parameter representing whether a DMVD function that derives the motion vector in a decoder is enabled into a bit stream including the coded target block.

## Description

### TECHNICAL FIELD

The present invention relates to coding and decoding of various multimedia data. The present invention particularly relates to coding and decoding of images and videos related to motion estimation on a decoder side.

### BACKGROUND ART

Wireless transmission and wired transmission of next-generation videos (for example, 4K/8K resolution) might demand coding efficiency that exceeds current coding capability. Higher coding efficiency is essential, but it is not desirable that encoders get greatly complex. Therefore, disposal of such encoders might raise great concerns. In a present video coding standard (see NPL 1), complexity of decoders is fairly lower than complexity of encoders. Therefore, a study to improve the coding efficiency in a manner that the decoder side undertakes the complexity continues.

Some studies and experiments relating to a decoder side motion estimation (DSME) technique are conducted, and as a result an improvement of the coding efficiency is proven. Motion estimation (ME) processing is executed in the decoder by using a nearby reconstructed block as a template. An optimum motion vector (MV) that is obtained as a result of the execution is used as a motion vector of a target block. In a cited technique (see NPL 2), instead of coding a motion vector explicitly on a bit stream, a motion vector is derived based on a template on a decoder side. Therefore, as a result, a load to include these motion vectors in a bit stream and to transmit the motion vectors is reduced so that the coding efficiency is improved.

### Citation List

### Non-Patent Literatures

NPL 1: ITU-T H.265 04/2013
NPL 2: Steffan Kamp, and the other two researchers, "DECODER SIDE MOTION VECTOR DERIVATION FOR INTER FRAME VIDEO CODING", Aachen University, Internet URL:http://www.ient.rwth-aachen.de/services/bib2web/pdf/KaEvWi08.pdf

### SUMMARY OF THE INVENTION

### TECHNICAL PROBLEM

However, even the coding method and the decoding method in NPL 2 cause a problem such that the coding efficiency is not sufficiently improved in some cases.

Therefore, the present invention provides a coding method and a decoding method that enable an improvement in the coding efficiency.

### SOLUTION TO PROBLEM

One aspect of the present invention provides a coding method for coding a moving image in each block, including selecting one nearby template from N (N being an integer equal to or greater than 2) nearby templates that are predefined for a target block and represent different regions spatially adjacent to the target block, deriving a motion vector using a reconstructed image in a region represented by the selected nearby template and a reference picture different from a picture including the target block, compensating a motion for the target block by using the derived motion vector so as to code the target block, writing a DMVD parameter representing whether a DMVD function that derives the motion vector in a decoder is enabled into a bit stream including the coded target block.

Note that these general or specific aspects may be implemented using a system, a method, an integrated circuit, a computer program, or a computer-readable recording medium such as a CD-ROM (Compact Disc-Read Only Memory), or using any given combination of a system, a method, an integrated circuit, a computer program, and a computer-readable recording medium.

### ADVANTAGEOUS EFFECT OF INVENTION

The coding method and the decoding method of the present invention can improve the coding efficiency.

### BRIEF DESCRIPTION OF DRAWINGS

FIG. 1 is a block diagram illustrating an exemplary structure of the coding apparatus according to a first exemplary embodiment.
FIG. 2 is a diagram illustrating an example of nearby templates assumed for target blocks according to the first exemplary embodiment.
FIG. 3 is a diagram illustrating an example of a nearby templates assumed for target blocks according to the first exemplary embodiment.
FIG. 4 is a diagram illustrating an example of nearby templates assumed for target blocks according to the first exemplary embodiment.
FIG. 5 is a diagram illustrating an example of nearby templates assumed for target blocks according to the first exemplary embodiment.
FIG. 6 is a diagram illustrating an example of nearby templates assumed for target blocks according to the first exemplary embodiment.
FIG. 7 is a diagram illustrating an example of nearby templates assumed for target blocks according to the first exemplary embodiment.
FIG. 8 is a flowchart illustrating one example of coding processing according to the first exemplary embodiment.
FIG. 9 is a flowchart illustrating another example of the coding processing according to the first exemplary embodiment.
FIG. 10 is a flowchart illustrating still another example of the coding processing according to the first exemplary embodiment.
FIG. 11 is a flowchart illustrating one example of selecting processing for selecting one nearby template from a plurality of nearby templates based on a predefined standard according to the first exemplary embodiment.
FIG. 12 is a flowchart illustrating another example of the selecting processing for selecting one nearby template from the plurality of nearby templates based on the predefined standard according to the first exemplary embodiment.
FIG. 13 is a diagram illustrating an example of positions of a DMVD enabling flag according to the first exemplary embodiment.
FIG. 14 is a diagram illustrating an example of positions of a parameter relating to selection of a nearby template according to the first exemplary embodiment.
FIG. 15 is a diagram illustrating an example of positions of one or more parameters indicating a plurality of predefined nearby templates according to the first exemplary embodiment.
FIG. 16A is a diagram illustrating one example of positions of a parameter for selecting a nearby template according to the first exemplary embodiment.
FIG. 16B is a diagram illustrating another example of the positions of the parameter for selecting the nearby template according to the first exemplary embodiment.
FIG. 16C is a diagram illustrating still another example of the positions of the parameter for selecting the nearby template according to the first exemplary embodiment.
FIG. 17 is a block diagram illustrating an exemplary structure of a decoding apparatus according to the first exemplary embodiment.
FIG. 18 is a flowchart illustrating one example of decoding processing according to the first exemplary embodiment.
FIG. 19 is a flowchart illustrating another example of the decoding processing according to the first exemplary embodiment.
FIG. 20 is a flowchart illustrating still another example of the decoding processing according to the first exemplary embodiment.
FIG. 21A is a flowchart illustrating one example of processing for selecting a DMVD template from a plurality of nearby templates based on the parameter according to the first exemplary embodiment.
FIG. 21 B is a flowchart illustrating one example of the processing for selecting a DMVD template from a plurality of nearby templates based on the parameter according to the first exemplary embodiment.
FIG. 21C is a flowchart illustrating another example of the processing for selecting a DMVD template from the plurality of nearby templates based on the parameter according to the first exemplary embodiment.
FIG. 21D is a flowchart illustrating still another example of the processing for selecting a DMVD template from the plurality of nearby templates based on the parameter according to the first exemplary embodiment.
FIG. 21E is a flowchart illustrating yet another example of the processing for selecting a DMVD template from the plurality of nearby templates based on the parameter according to the first exemplary embodiment.
FIG. 21F is a flowchart illustrating yet another example of the processing for selecting a DMVD template from the plurality of nearby templates based on the parameter according to the first exemplary embodiment.
FIG. 22A is a flowchart illustrating one example of a coding method according to one exemplary embodiment of the present invention.
FIG. 22B is a flowchart illustrating one example of a decoding method according to one exemplary embodiment of the present invention.
FIG. 23 is a diagram illustrating the overall configuration of a content providing system that implements content distribution services.
FIG. 24 is a diagram illustrating the overall configuration of a digital broadcasting system.
FIG. 25 is a block diagram illustrating an example of a configuration of a television.
FIG. 26 is a block diagram illustrating an example of a configuration of an information reproducer/recorder that reads information from and writes information to a recording medium which is an optical disc.
FIG. 27 is a diagram illustrating an example of a structure of an optical disc recording medium.
FIG. 28A is a diagram illustrating an example of a mobile phone.
FIG. 28B is a block diagram illustrating an example of a configuration of the mobile phone.
FIG. 29 is a diagram illustrating a structure of multiplexed data.
FIG. 30 is a diagram schematically illustrating how individual streams are multiplexed into multiplexed data.
FIG. 31 is a diagram illustrating how a video stream is stored in a PES (Packetized Elementary Stream) packet sequence in a more detailed manner.
FIG. 32 is a diagram illustrating structures of a TS (Transport Stream) packet and a source packet in multiplexed data.
FIG. 33 is a diagram illustrating a data structure of a PMT (Program Map Table).
FIG. 34 is a diagram illustrating an internal structure of multiplexed data information.
FIG. 35 is a diagram illustrating an internal structure of stream attribute information.
FIG. 36 is a diagram illustrating steps for identifying video data.
FIG. 37 is a block diagram illustrating an example of a configuration of an integrated circuit that implements a video coding method and a video decoding method according to each of the exemplary embodiments.
FIG. 38 is a diagram illustrating a configuration for switching between driving frequencies.
FIG. 39 is a diagram illustrating steps for identifying video data and switching between driving frequencies.
FIG. 40 is a diagram illustrating an example of a lookup table in which a video data standard and a driving frequency are associated with each other.
FIG. 41A is a diagram illustrating an example of a configuration that enables sharing of modules among signal processors.
FIG. 41 B is a diagram illustrating another example of a configuration that enables sharing of modules among signal processors.

### DESCRIPTION OF EMBODIMENTS

### (Underlying Knowledge Forming Basis of the Present Invention)

In a coding method and a decoding method in NPL 2, only one template is predetermined for a target block, and only this template can be used. Therefore, when a dimension and a shape of the template are not inappropriate for a target block, accuracy of motion estimation is deteriorated, and coding efficiency is not improved.

In order to solve such a problem, one exemplary embodiment of the present invention provides a coding method for coding a moving image in each block. In this method, one nearby template is selected from N (N being an integer equal to or greater than 2) nearby templates that are predefined for a target block and represent different regions spatially adjacent to the target block, and a motion vector is derived by using a reconstructed image in a region represented by the selected nearby template and a reference picture different from a picture including the target block. A motion is compensated for the target block by using the derived motion vector so that the target block is coded. A DMVD parameter that indicates whether a DMVD function for deriving the motion vector in a decoder is enabled is written into a bit stream including the coded target block.

As a result, since one nearby template is selected from the N nearby templates that are predefined for the target block, the nearby template appropriate for the target block can be selected, and the accuracy of motion estimation can be improved. As a result, the coding efficiency can be improved. Further, since the DMVD parameter is written into the bit stream, the motion vector for decoding the target block can be derived, namely, the motion estimation can be conducted in a decoder as need arises. Therefore, the decoder can suitably decode the bit stream in which the coding efficiency is improved.

The coding method further includes identifying the N nearby templates predefined for the target block. In the selection of the nearby template, the nearby template is selected from the identified N nearby templates. In the writing of the DMVD parameter, an identification parameter for identifying the selected nearby template may be written as the DMVD parameter that represents that the DMVD function is enabled.

As a result, since the identification parameter is written into the bit stream, the nearby template used for coding the target block can be easily selected and used by the decoder. Therefore, the decoder can appropriately decode the target block.

The coding method further includes determining which subset is selected from a plurality of subsets each of which is formed by the plurality of nearby templates whose number is less than N or whether no subset is used, and writing an extension parameter representing a determined result of the subset as a value into the bit stream. In the selection of the nearby template, (a) when the extension parameter indicates a predetermined value, a subset according to the extension parameter is specified from the plurality of subsets and one nearby template is selected from M (M being an integer equal to or greater than 2 and smaller than N) nearby templates, included in the specified subset, in the N nearby templates, and (b) when the extension parameter does not indicate the predetermined value, one nearby template may be selected from the N nearby templates.

As a result, when a subset is used, one nearby template is selected from the M nearby templates whose number is smaller than the N nearby templates, namely, a number of the plurality of nearby templates to be candidates of the nearby template to be selected reduces. For this reason, a processing load for the selection of the nearby templates can be reduced.

The coding method further includes determining whether the nearby template is adaptively changed. In the writing of the DMVD parameter, a parameter indicating a result of determining whether the change is made as a value is written as the DMVD parameter. In the selection of the nearby template, when the DMVD parameter indicates a predetermined value, one nearby template may be selected from the N nearby templates according to a region of a reconstructed image generated around the target block at a time of coding the target block.

As a result, the nearby template is adaptively selected according to a condition of the coding, namely, a dimension and a size of the nearby template can be adaptively changed, so that the coding efficiency can be improved.

Further, in the selection of the nearby template, priorities are determined for a plurality of nearby templates to be candidates in the N nearby templates, and a nearby template with the highest priority may be selected from at least one nearby template in the plurality of nearby templates to be candidates at a time of coding the target block. In at least one nearby template, all reconstructed images in the region represented by the nearby template are generated.

As a result, one nearby template can be appropriately selected from the plurality of nearby templates to be candidates. Further, such a method for selecting a nearby template is executed as a predefined standard also on a decoder side, so that the decoder side can appropriately select the nearby template selected by the encoder.

Further, in the selection of the nearby template, a degree of a distortion between an image represented by a motion vector to be derived for the nearby template and an image of the nearby template is calculated as a distortion value for the plurality of nearby templates to be candidates in the N nearby templates. A nearby template whose distortion value is smallest may be selected from the plurality of nearby templates to be candidates.

As a result, one nearby template can be appropriately selected from the plurality of nearby templates to be candidates. Further, such a method for selecting a nearby template is executed as a predefined standard also on a decoder side, so that the decoder side can appropriately select the nearby template selected by the encoder.

Further, in the writing of the DMVD parameter, a value that represents whether the DMVD function is enabled may be written as the DMVD parameter according to whether the value is larger than a predetermined threshold.

As a result, the DMVD parameter can be used also as a parameter that represents a value to be used for a function other than the DMVD function, such as a size in a candidate list. Therefore, since the other parameters included in the bit stream can be used as the DMVD parameter, the coding efficiency can be further improved.

Further, one aspect of the present invention provides a decoding method for decoding a bit stream representing a coded moving image in each block. This method includes deciphering a DMVD parameter representing whether a DMVD function for deriving a motion vector in a decoder is enabled from the bit stream, and selecting one nearby template from N (N being an integer equal to or greater than 2) nearby templates that are predefined for a target block and represent different regions spatially adjacent to the target block based on the deciphered DMVD parameter, deriving a motion vector using a reconstructed image in the region represented by the selected nearby template and a reference picture different from a picture including the target block, and compensating a motion for the target block using the derived motion vector so as to decode the target block.

As a result, when the DMVD parameter indicates that the DMVD function is enabled, one nearby template is selected from the N nearby templates predefined for the target block. Therefore, an appropriate nearby template can be selected for the target block, and a bit stream whose coding efficiency is improved can be appropriately decoded.

The decoding method further includes identifying the N nearby templates that are predefined for the target block. In the decipher of the DMVD parameter, the identification parameter for identifying the nearby template to be selected is deciphered as the DMVD parameter that represents that the DMVD function is enabled. In the selection of the nearby template, the nearby template according to the identification parameter may be selected from the identified N nearby templates.

As a result, since the identification parameter is deciphered from the bit stream, the nearby template that is used for coding the target block can be easily selected and used. Therefore, the target block can be appropriately decoded.

The decoding method further includes deciphering, from the bit stream, an extension parameter that represents which subset is selected from a plurality of subsets each of which is formed by the plurality of nearby templates whose number is less than N or whether no subset is used as a value. In the selection of the nearby template, (a) when the extension parameter indicates a predetermined value, a subset according to the extension parameter is specified from the plurality of subsets, and one nearby template is selected from M (M being an integer equal to or greater than 2 and smaller than N) nearby templates, included in the specified subset, in the N nearby templates, and (b) when the extension parameter does not indicate the predetermined value, one nearby template may be selected from the N nearby templates.

As a result, when a subset is used, one nearby template is selected from the M nearby templates whose number is smaller than the N, namely, a number of the plurality of nearby templates to be candidates of the nearby template to be selected reduces. For this reason, a processing load for the selection of the nearby templates can be reduced.

Further, in the decipher of the DMVD parameter, the parameter that represents whether the nearby template is adaptively changed as a value is deciphered as the DMVD parameter. In the selection of the nearby template, when the DMVD parameter indicates a predetermined value, one nearby template may be selected from the N nearby templates according to a region of a reconstructed image generated around the target block at a time of decoding the target block.

As a result, the nearby template can be adaptively selected according to a decoding condition, namely, a dimension and a size of the nearby template can be adaptively changed. As a result, the bit stream whose coding efficiency is improved can be adaptively decoded.

Further, in the selection of the nearby template, priorities are determined for a plurality of nearby templates to be candidates in the N nearby templates, and a nearby template with the highest priority may be selected from at least one nearby template in the plurality of nearby templates to be candidates at a time of decoding the target block. In at least one nearby template, all reconstructed images in the region represented by the nearby template are generated.

As a result, one nearby template can be appropriately selected from the plurality of nearby templates to be candidates. Further, when such a method for selecting a nearby template is executed as a predefined standard also on the encoder side, the nearby template selected by the encoder can be appropriately selected.

Further, in the selection of the nearby template, a degree of a distortion between an image represented by a motion vector to be derived for the nearby template and an image of the nearby template is calculated as a distortion value for the plurality of nearby templates to be candidates in the N nearby templates. A nearby template whose distortion value is smallest may be selected from the plurality of nearby templates to be candidates.

As a result, one nearby template can be appropriately selected from the plurality of nearby templates to be candidates. Further, when such a method for selecting a nearby template is executed as a predefined standard also on an encoder side, the nearby template selected by the encoder can be appropriately selected.

Further, in the decipher of the DMVD parameter, a value that represents whether the DMVD function is enabled may be deciphered as the DMVD parameter according to whether the value is larger than a predetermined threshold.

As a result, the DMVD parameter can be used also as a parameter that represents a value to be used for a function other than the DMVD function, such as a size in a candidate list. Therefore, since the other parameters included in the bit stream can be used as the DMVD parameters, the bit stream whose coding efficiency is further improved can be appropriately decoded.

Note that these general or specific aspects may be implemented using a system, a method, an integrated circuit, a computer program, or a computer-readable recording medium such as a CD-ROM (Compact Disc-Read Only Memory), or using any given combination of a system, a method, an integrated circuit, a computer program, and a computer-readable recording medium.

Exemplary embodiments are specifically described below with reference to the drawings.

The exemplary embodiments described below describe generic or specific examples. Numerical values, shapes, materials, components, disposition and a connecting form of the components, steps and an order of the steps are examples, and thus they are not intended to limit the present invention. Further, components that are not described in independent claims as the highest-order concept in the components in the following exemplary embodiments are described as any components.

### FIRST EXEMPLARY EMBODIMENT

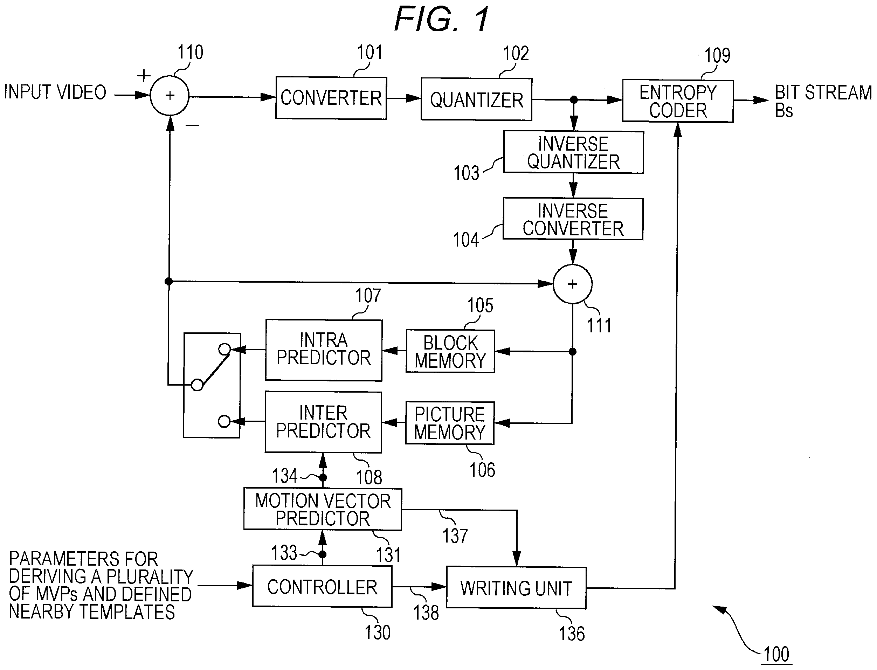

FIG. 1 is a block diagram illustrating an exemplary configuration of a coding apparatus according the present exemplary embodiment.

Coding apparatus 100 codes an input video (namely, a moving image) in each block so as to generate bit stream Bs. As illustrated in FIG. 1, coding apparatus 100 may include converter 101, quantizer 102, inverse quantizer 103, inverse converter 104, block memory 105, picture memory (also called a frame memory) 106, intra predictor 107, inter predictor 108, entropy coder 109, subtractor 110, adder 111, controller 130, motion vector predictor 131, and writing unit 136.

Subtractor 110 subtracts a prediction image related to a block to be coded that is included in the input video (hereinafter, such a block to be coded will be referred to as a target block) from the target block, so as to generate a difference image formed by a plurality of subtracted values, and outputs the difference image to converter 101. The prediction image is an image that is generated by intra predictor 107 or inter predictor 108. Converter 101 converts the difference image into a plurality of frequency coefficients, and outputs the plurality of obtained frequency coefficients to quantizer 102. Quantizer 102 quantizes the plurality of input frequency coefficients, and outputs a plurality of quantized values obtained by the quantization to inverse quantizer 103 and entropy coder 109. Entropy coder 109 entropy-codes the plurality of quantized values output from quantizer 102, and outputs bit stream Bs that includes the plurality of quantized values that has been subject to the entropy coding. That is to say, bit stream Bs includes the coded target block.

Inverse quantizer 103 inversely quantizes the plurality of quantized values output from quantizer 102, and outputs the plurality of frequency coefficients obtained by the inverse quantization to inverse converter 104. Inverse converter 104 inversely converts the plurality of frequency coefficients into a difference image formed by a plurality of pixel values (also called sample values) so as to output the difference image to adder 111. Adder 111 adds the difference image output from inverse converter 104 to the prediction image output from inter predictor 108 or intra predictor 107 so as to generate a reconstructed image. Adder 111, then, outputs the generated reconstructed image to block memory 105 or picture memory 106 for further prediction.

Intra predictor 107 makes intra prediction using at least one reconstructed image stored in block memory 105, and generates a prediction image for the target block through the intra prediction. Inter predictor 108 makes motion compensation based on a motion vector derived or selected by motion vector predictor 131. That is to say, inter predictor 108 obtains, based on the motion vector, an image that is the most similar to an image of the target block (or a nearby template, described later), for example, from the reference picture that is formed by at least one reconstructed image stored in picture memory 106. As a result, the prediction image (also called a prediction block or a prediction sample) is generated. The reference picture is different from the picture including the target block, and is specified by, for example, a reference index.

Controller 130 receives a plurality of parameters for driving the plurality of defined nearby templates and motion vector predictions (MVPs). For example, the plurality of parameters is parameters representing a reference index, a candidate index, or a plurality of nearby templates. In the present exemplary embodiment, controller 130 determines or identifies a plurality of predefined nearby templates based on a type of the reference picture in order to generate motion vector prediction candidates that are included in a candidate list (also called a candidate set). Further or in another way, controller 130 determines whether these nearby templates (specifically, motion vectors based on the plurality of predefined nearby templates) are included in the candidate set. Controller 130, then, outputs signal 133 that represents the determined result to motion vector predictor 131.

Motion vector predictor 131 derives at least one motion vector prediction candidate to be used for a candidate list (of motion vector prediction candidate) for the target block having a motion vector and a reference picture. Further, motion vector predictor 131 estimates a motion so as to derive a motion vector. Motion vector predictor 131 further derives one motion vector prediction candidate as motion vector prediction based on the motion vector that is derived by the motion estimation from at least one motion vector prediction candidate included in the candidate list. Therefore, motion vector predictor 131 includes a candidate index for specifying the derived motion vector prediction into signal 137 from the candidate list created based on signal 133 that is output from controller 130 so as to output candidate index to writing unit 136. Further, motion vector predictor 131 calculates a difference between the motion vector derived by the motion estimation and the derived motion vector prediction as a delta motion vector, and includes the delta motion vector and the reference index of the reference picture into signal 137 so as to output the delta motion vector and reference index to writing unit 136.

Writing unit 136 obtains, from controller 130, parameter 138 representing the plurality of nearby templates determined or identified by controller 130 and predefined for the target block, and writes parameter 138 into bit stream Bs. Further, writing unit 136 writes candidate index, the delta motion vector, and the reference index included in signal 137 into bit stream Bs.

Coding apparatus 100 according to this embodiment is an apparatus relating to a decoder side motion estimation (DSME) technique, in other words, an apparatus that copes with a function for deriving a motion vector on the decoder side (DMVD: Decoder side Motion Vector Derivation). Therefore, motion vector predictor 131 of coding apparatus 100 estimates a motion based on a reconstructed image in a nearby template as a region spatially adjacent to the target block (hereinafter, the motion estimation based on the nearby template) in order to realize DMVD.

That is to say, controller 130 according to the present exemplary embodiment determines whether the motion estimation is done based on the target block included in the input video (hereinafter, the motion estimation based on the input image) or the motion estimation is done based on the nearby template. The motion estimation based on the input image is processing for estimating a block similar to the image of the target block from the reference picture different from the picture including the target block. Further, the motion estimation based on the nearby template is processing for estimating the block similar to the reconstructed image in the nearby template from the reference picture different from the picture including the target block.

When the determination is made that the motion estimation is done based on the nearby template, controller 130 determines or identifies the plurality of nearby templates predefined for the target block as described above, and determines that these nearby templates are included in the candidate list. Further, the determination is made that the motion vector derived by the motion estimation for the nearby template is included in candidate set.

When the determination is made that the motion estimation is made based on the input image, motion vector predictor 131 does the motion estimation based on the input image, and outputs the motion vector obtained by the motion estimation to inter predictor 108. On the other hand, when the determination is made that the motion estimation is done based on the nearby template, motion vector predictor 131 generates a candidate list that includes the plurality of predefined nearby templates represented by signal 133. A number of the plurality of predefined nearby templates is N (N being an integer equal to or greater than 2). Motion vector predictor 131 selects one nearby template from the N nearby templates. Further, motion vector predictor 131 derives a motion vector using the reconstructed image in the region represented by the selected nearby template and the reference picture. That is to say, motion vector predictor 131 does the motion estimation based on the nearby template. Motion vector predictor 131 outputs the motion vector derived by the motion estimation to inter predictor 108. Further, motion vector predictor 131 includes an identification parameter for identifying the selected template as a candidate index into signal 137 so as to output this parameter to writing unit 136.

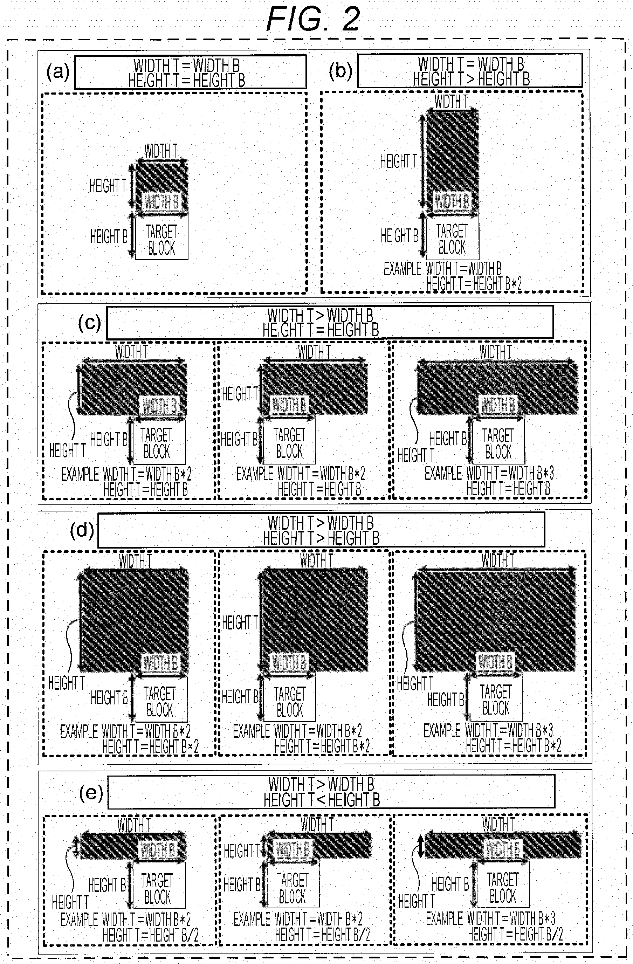

FIG. 2 to FIG. 7 are diagrams illustrating examples of some nearby templates that are assumed for the target block. Since all the illustrated nearby templates can cope with functionality of motion vector deriving (DMVD) processing on the decoder side, these templates are represented as DMVD templates in the present exemplary embodiment. However, the DMVD templates are not limited to the examples illustrated in FIG. 2 to FIG. 7.

For example, as illustrated in FIGS. 2(a) to 2(e), a rectangular region adjacent to a portion above the target block (in FIG. 2, a region indicated by hatching using diagonal lines) may be identified as the nearby template. As illustrated in FIGS. 2(c) to 2(e), when a nearby template to be selected is located on a portion above the target block, a width of the nearby template to be selected may be a width of the target block or more. Further, as illustrated in FIG. 2(e), when a height of the nearby template to be selected is smaller than a height of the target block, an area of the nearby template to be selected may be an area of the target block or more.

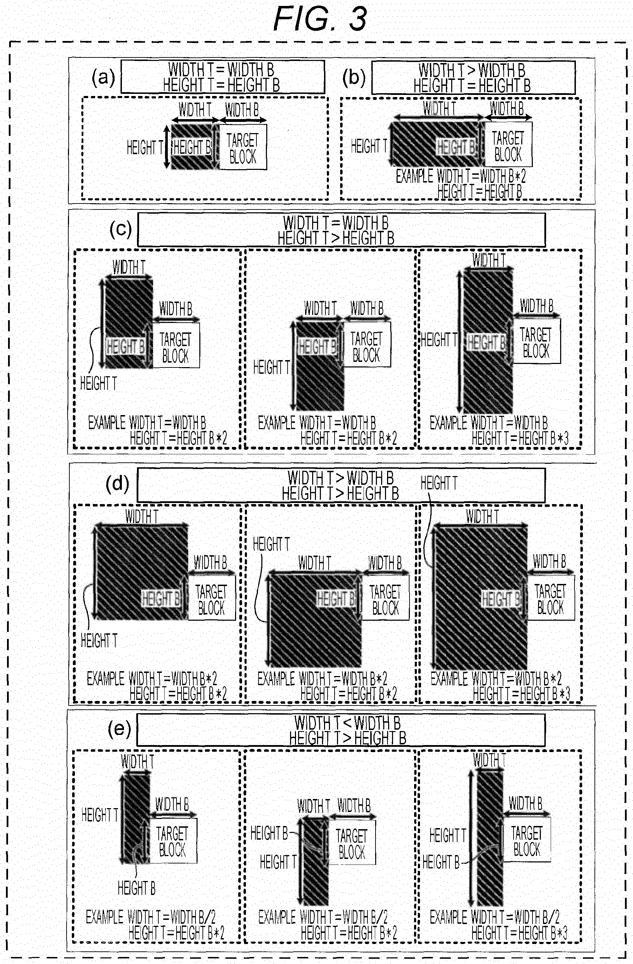

Further, as illustrated in FIGS. 3(a) to 3(e), a rectangular region adjacent to a left of the target block (in FIG. 3, a region indicated by hatching using diagonal lines) may be identified as the nearby template. As illustrated in FIGS. 3(c) to 3(e), when the nearby template to be selected is located on the left of the target block, the height of the nearby template to be selected may be the height of the target block or more. Further, as illustrated in FIG. 3(e), when the width of the nearby template to be selected is smaller than the width of the target block, the area of the nearby template to be selected may be the area of the target block or more.

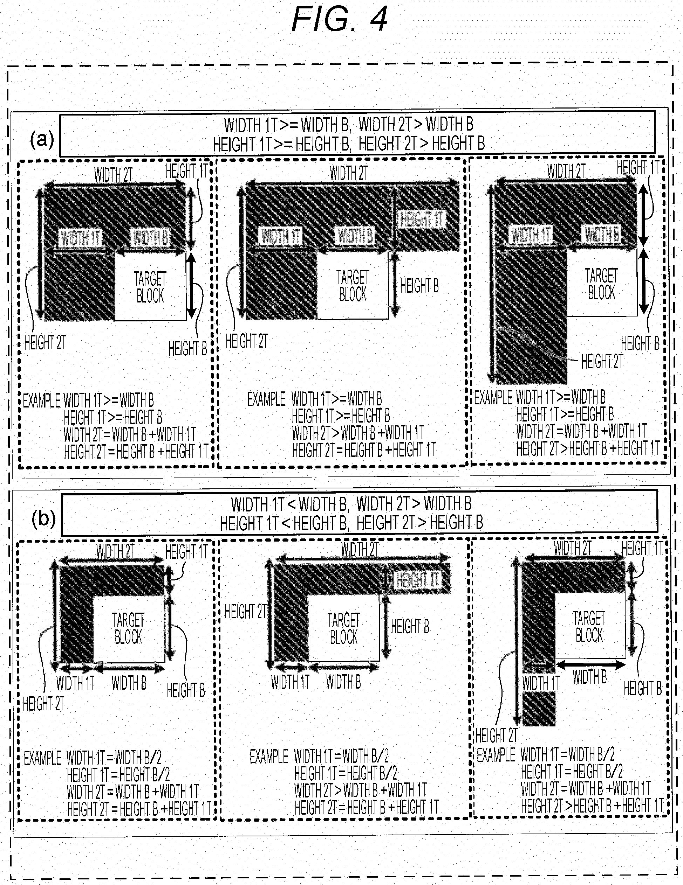

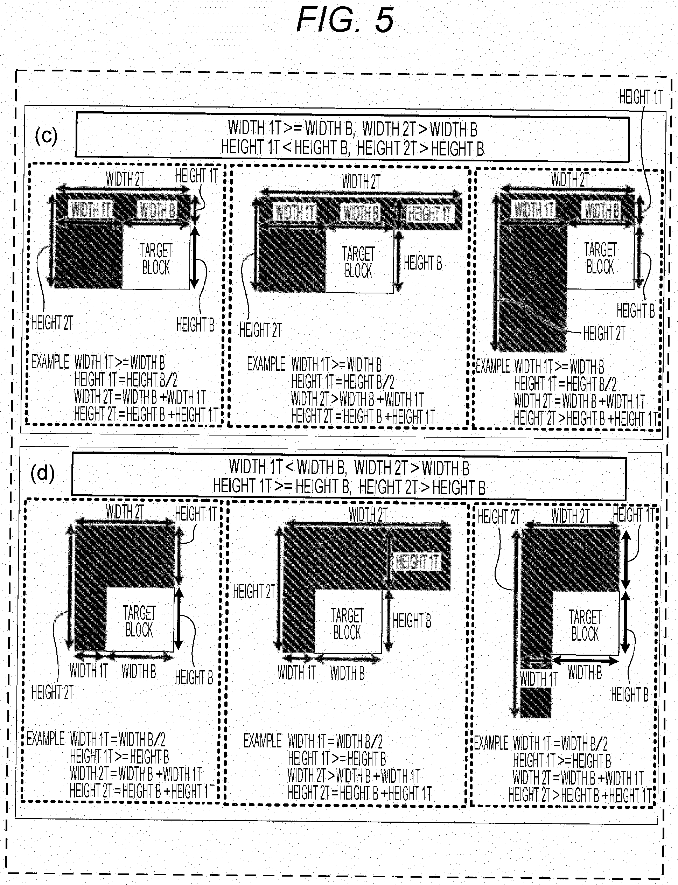

Further, as illustrated in FIGS. 4(a) and 4(b) and FIGS. 5(c) and 5(d), an inverted-L shaped region adjacent to a portion above the target block and the left of the target block (in FIG. 4 and FIG. 5, a region indicated by hatching using diagonal lines) may be identified as the nearby template.

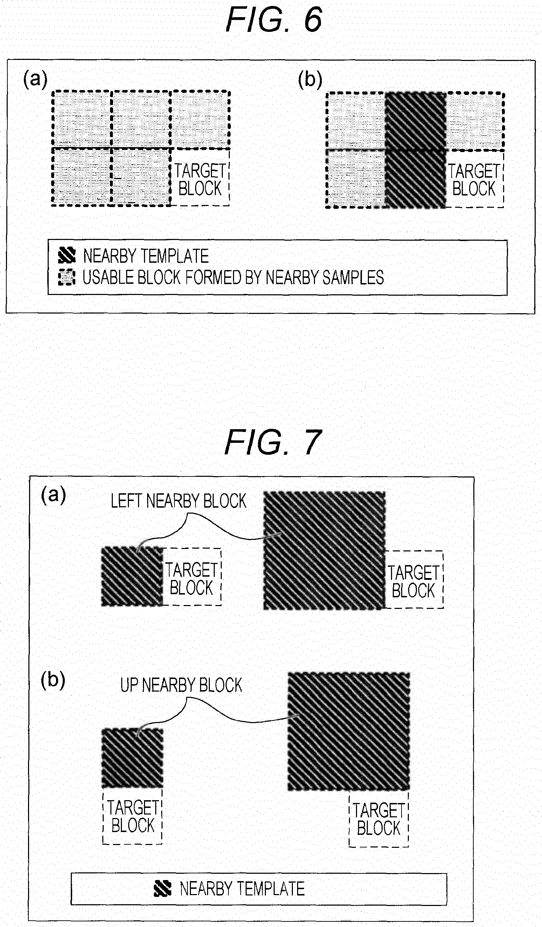

Further, for example, as illustrated in FIG. 6(a), when a block at a lower right end in a block group formed by three blocks in width by two blocks in height is the target block, five blocks in the block group excluding the target block may be treated as blocks that can be used for the nearby template. Therefore, a region formed by a combination of at least one block in the five blocks is identified as the nearby template or the DMVD template of the target block. Since a plurality of combinations is present, a plurality of predefined nearby templates is identified. As illustrated in FIG. 6(b), a region formed by two blocks on the left of the target block is selected as the nearby template, for example.

Further, for example as illustrated in FIG. 7(a) or 7(b), two square regions of different dimensions that are adjacent to the left of or the portion above the target block may be identified as the nearby template predefined for the target block. Any one nearby template is selected from these nearby templates. The nearby templates to be selected in such a manner are nearby blocks that are adjacent to the target block and can be used. The usable nearby blocks are blocks where all reconstructed images included in the nearby blocks are generated at the time of coding the target block.

Coding apparatus 100 according to the present exemplary embodiment is a coding apparatus that codes a moving image in each block, and includes a selector, a deriver, a coder, and writing unit 136.

The selector is realized by some functions of motion vector predictor 131. That is to say, the selector selects one nearby template from N (N being an integer equal to or greater than 2) nearby templates that are predefined for the target block and represent different regions spatially adjacent to the target block. The deriver is realized by some functions of motion vector predictor 131. That is to say, the deriver derives a motion vector using the reconstructed image in the region represented by the selected nearby template and the reference picture different from the picture including the target block. The coder is formed by at least one of inter predictor 108, converter 101, quantizer 102, inverse quantizer 103, inverse converter 104, picture memory 106, entropy coder 109, subtractor 110, and adder 111. That is to say, the coder makes motion compensation on the target block using the derived motion vector so as to code the target block. Further, writing unit 136 writes the DMVD parameter representing whether the DMVD function for deriving the motion vector is enabled in the decoder into bit stream Bs including the coded target block. For example, writing unit 136 writes an identification parameter for identifying the selected nearby template (for example, a candidate index) as the DMVD parameter into bit stream Bs.

As a result, since one nearby template is selected from the N nearby templates that are predefined for the target block, the nearby template appropriate for the target block can be selected, and the accuracy of the motion estimation can be improved. As a result, the coding efficiency can be improved. Further, since the DMVD parameter is written into bit stream Bs, the motion vector for decoding the target block can be derived in a decoder, namely, the motion estimation can be done as need arises. Therefore, the decoder can appropriately decode bit stream Bs whose coding efficiency is improved.

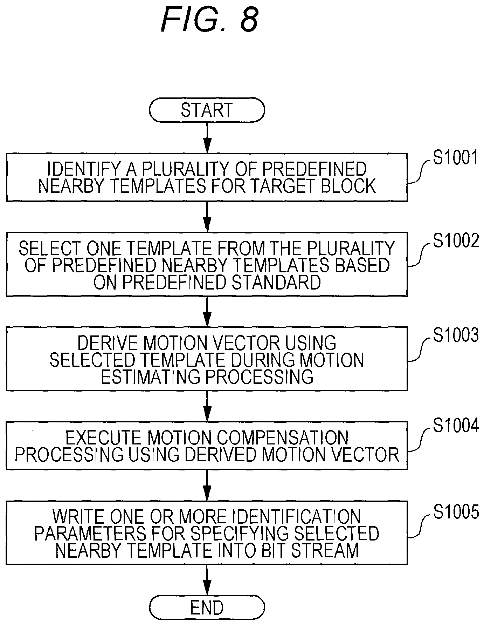

The coding method for executing the motion estimating processing using a nearby template according to the present exemplary embodiment is described with reference to FIG. 8 to FIG. 10.

FIG. 8 is a flowchart illustrating one example of the coding processing according to the present exemplary embodiment.

Controller 130 of coding apparatus 100 identifies the plurality of predefined nearby templates for the target block at first step S1001. Motion vector predictor 131 selects one nearby template from the plurality of predefined nearby templates based on a predefined standard at next step S1002. Motion vector predictor 131 derives the motion vector using the selected nearby template during the motion estimating processing at step S1003. Inter predictor 108 makes the motion compensation using the derived motion vector at step S1004. The target block is coded by this motion compensation. Writing unit 136 writes one or more identification parameters for specifying the selected nearby template into bit stream Bs at final step S1008.

When the target block is coded as a block included in a B picture or a B slice based on two reference picture lists at step S1003, the plurality of motion vectors is derived from the selected nearby template. Further, also when the target block is not included in the B picture nor the B slice, the plurality of motion vectors may be derived as candidates of the motion vector from the selected nearby template.

In the coding processing illustrated in the flowchart of FIG. 8, since the identification parameter is written into bit stream Bs, the nearby template used for coding the target block can be easily selected and used also in the decoder. Therefore, the decoder can appropriately decode the target block.

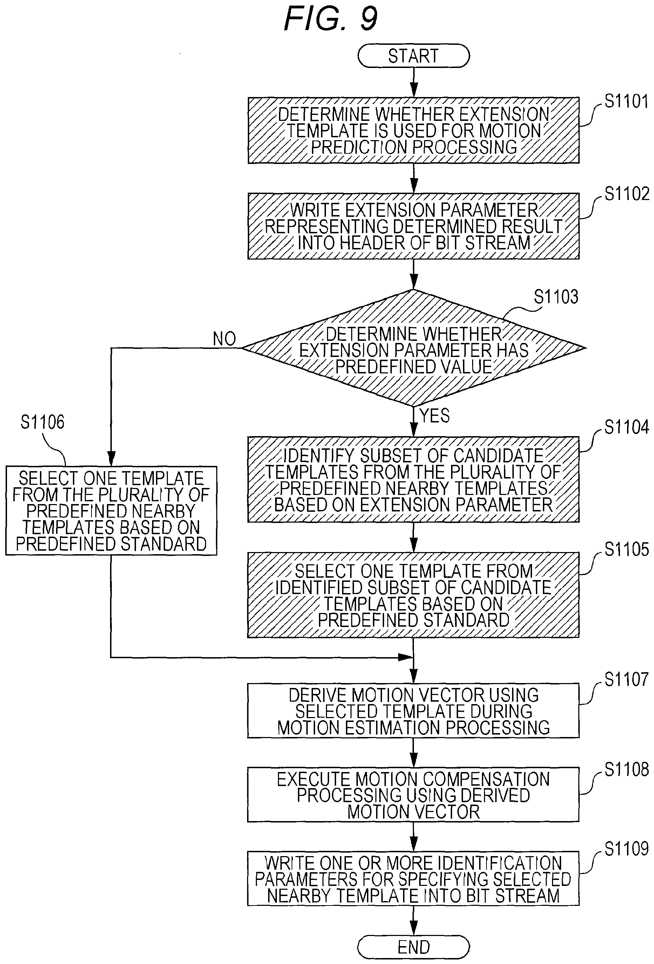

FIG. 9 is a flowchart illustrating another example of the coding processing according to the present exemplary embodiment.

Controller 130 of coding apparatus 100 determines at first step S1101 whether an extension template (a so-called subset, described later) is used for the motion estimating process. Writing unit 136 writes an extension parameter representing the determined result into a header of bit stream Bs at next step S1102. Motion vector predictor 131 determines whether the extension parameter has a predefined value at next step S1103. When the extension parameter has the predefined value (Yes at step S1103), motion vector predictor 131 identifies a subset of a candidate template from the plurality of predefined nearby templates based on the extension parameter at step S1104. When the number of the plurality of predefined nearby templates is N (N being an integer equal to or greater than 2), the subset includes M (M being an integer equal to or greater than 2 and smaller than N) nearby templates in the N nearby templates as candidate template.

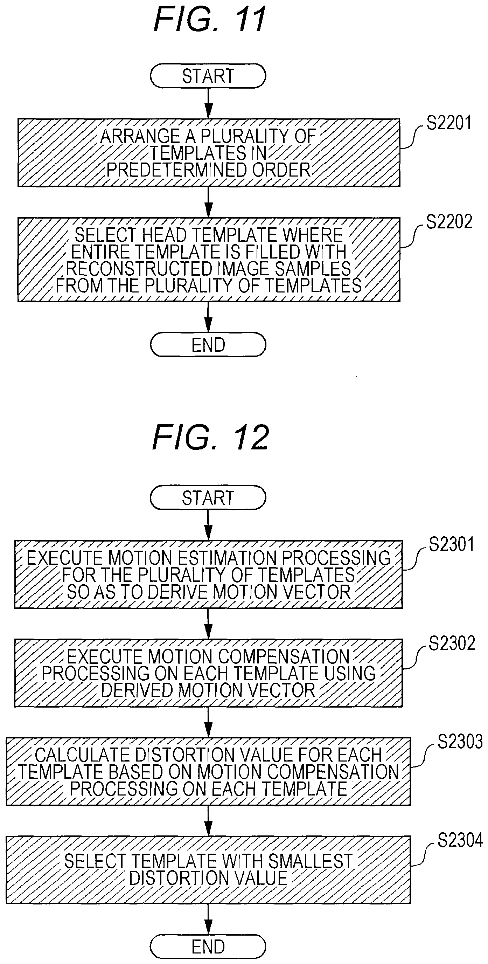

Therefore, motion vector predictor 131 selects one candidate template, namely, the nearby template from the plurality of candidate templates included in the identified subset at step S1105 based on the predefined standard. The selection of the nearby template is made, for example, according to selection processing illustrated in FIG. 11 or FIG. 12, described later.

On the other hand, when the extension parameter does not have the predefined value (No at step S1103), motion vector predictor 131 directly selects one nearby template from a plurality of (for example, N) predefined nearby templates at step S1106 based on the predefined standard.

Motion vector predictor 131 derives the motion vector for the target block using the selected nearby template during the motion estimating processing at step S1107. Thereafter, inter predictor 108 executes the motion compensation processing using the derived motion vector at step S1108. Writing unit 136 writes one or more identification parameters for specifying the selected nearby template into bit stream Bs at final step S1109.

In the coding processing illustrated in the flowchart of FIG. 9, coding apparatus 100 further determines which subset is selected from a plurality of subsets each of which is formed by the plurality of nearby templates whose number is less than N or whether no subset is used. Coding apparatus 100 writes an extension parameter indicating the determined result of the subset as a value into bit stream Bs. When the extension parameter indicates a predetermined value in the selection of the nearby template, coding apparatus 100 specifies a subset from the plurality of subsets according to the extension parameter. Further, coding apparatus 100 selects one nearby template from M (M being an integer equal to or greater than 2 and smaller than N) nearby templates included in the specified subset in the N nearby templates. On the other hand, when the extension parameter does not indicate the predetermined value, coding apparatus 100 selects one nearby template from the N nearby templates.

As a result, when a subset is used, one nearby template is selected from the M nearby templates whose number is smaller than the N, namely, a number of the plurality of nearby templates to be candidates of the nearby template to be selected reduces. For this reason, the processing load for the selection of the nearby templates can be reduced.

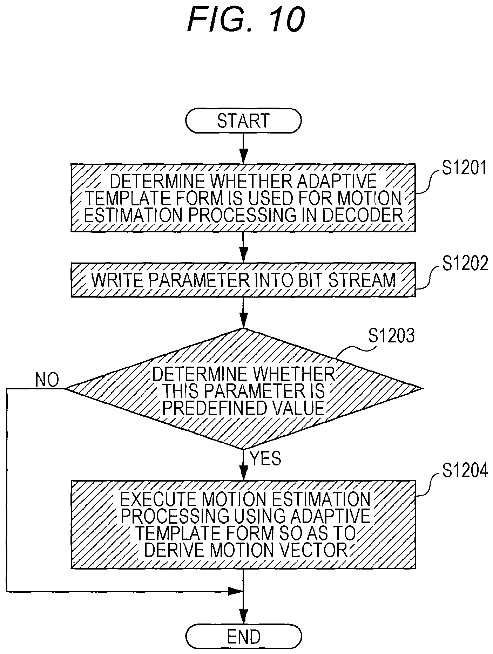

FIG. 10 is a flowchart illustrating still another example of the coding processing according to the present exemplary embodiment. Controller 130 of coding apparatus 100 determines at first step S1201 whether an adaptive template form is used for the motion estimating processing in the decoder. That is to say, controller 130 determines whether the nearby template is adaptively changed. Writing unit 136 writes a parameter representing the determined result (as the DMVD parameter) into a header of bit stream Bs at next step S1202. Motion vector predictor 131 determines whether the parameter has a predefined value at next step S1203. When the parameter has the predefined value (Yes at step S1203), motion vector predictor 131 executes the motion estimating processing using the adaptive template form at final step S1204. The adaptive template form means to adaptively change at least one of a position, a dimension, and a shape of the nearby template.

That is to say, motion vector predictor 131 selects one nearby template from the N nearby templates according to a region of the reconstructed image generated around the target block at the time of coding the target block. More specifically, motion vector predictor 131 selects one nearby template from at least one nearby template where all reconstructed images in the region represented by the nearby templates in the N nearby templates are generated at the time of coding the target block.

As a result, the nearby template can be adaptively selected according to the coding condition, namely, the position, the dimension, and the size of the nearby template can be adaptively changed, so that the coding efficiency can be improved.

FIG. 11 is a flowchart illustrating one example of selecting processing for selecting one nearby template from a plurality of nearby templates based on a predefined standard.

Motion vector predictor 131 arranges the plurality of nearby templates to be candidates in a predetermined order, namely, aligns them at first step S2201. For example, motion vector predictor 131 arranges the plurality of nearby templates in decreasing order from the largest template to the smallest template. That is to say, the plurality of nearby templates to be candidates whose sizes are larger is provided with higher priority. At this time, the plurality of nearby templates to be candidates is arranged so that the sizes of the nearby templates become smaller in a backward direction from the head, and the priorities of the plurality of nearby templates are determined according to the arrangement order.

Motion vector predictor 131 selects a head nearby template that satisfies the predetermined standard from the plurality of nearby templates arranged in the predefined order at final step S2202. The predetermined standard is such that all the nearby templates are satisfied by reconstructed pixels (image samples). The plurality of nearby templates includes some nearby templates where not all the pixel samples are not reconstructed when they are necessary for the motion estimation because of a coding order in the target block. Therefore, these imperfect nearby templates are not selected in the selecting processing.

In the selecting processing illustrated by the flowchart of FIG. 11, motion vector predictor 131 determines the priorities for the plurality of nearby templates to be candidates in the N nearby templates. Further, motion vector predictor 131 selects a nearby template having the highest priority in the plurality of nearby templates to be candidates from at least one nearby template where all reconstructed images in the region represented by the nearby template are generated at the time of coding the target block.

As a result, one nearby template can be appropriately selected from the plurality of nearby templates to be candidates. Further, such a method for selecting a nearby template is executed as a predefined standard also on a decoder side, so that the decoder side can appropriately select the nearby template selected by the encoder.

FIG. 12 is a flowchart illustrating another example of selecting processing for selecting one nearby template from a plurality of nearby templates based on a predefined standard.

Motion vector predictor 131 does the motion estimation on the plurality of nearby templates to be candidates so as to derive motion vectors for the plurality of nearby templates at first step S2301. Inter predictor 134 executes the motion compensation processing on the nearby templates using the motion vectors derived for the respective nearby templates at next step S2302. Motion vector predictor 131 calculates a distortion value for each nearby template at step S2303 based on the motion compensation processing on each nearby template. The distortion value represents a difference between an image generated by the motion compensation processing and an original image of the nearby template. Motion vector predictor 131 selects the nearby template with the smallest distortion value from the plurality of nearby templates to be candidates at last step S2304.

In the selecting processing illustrated in the flowchart of FIG. 11, motion vector predictor 131 calculates the distortion value for each of the plurality of nearby templates to be candidates in the N nearby templates. The distortion value represents a degree of a distortion between an image represented by the motion vector derived for the nearby template and an image of the nearby template. Motion vector predictor 131, then, selects a nearby template with the smallest distortion value from the plurality of nearby templates to be candidates.

As a result, similarly to the selecting processing illustrated in FIG. 10, one nearby template can be appropriately selected from the plurality of nearby templates to be candidates. Further, such a method for selecting a nearby template is executed as a predefined standard also on a decoder side, so that the decoder side can appropriately select the nearby template selected by the encoder.

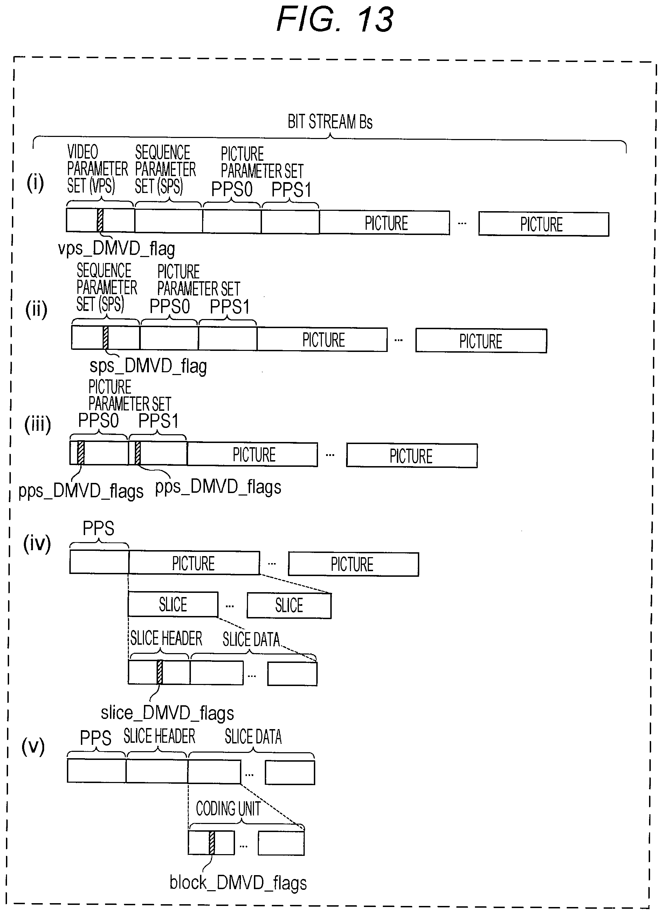

FIG. 13 is a diagram illustrating an example of a position of a DMVD enabling flag. When the DMVD enabling flag is not present in a bit stream, residual processing in the present exemplary embodiment is independently executed. The DMVD enabling flag is the DMVD parameter that represents whether the DMVD function that is a function for deriving a motion vector in the decoder is enabled.

For example, writing unit 136 may write the DMVD enabling flag as vps_DMVD_flag into a video parameter set (VPS) as shown in FIG. 13(i). When the vps_DMVD_flag indicates validity of the DMVD function, processing for realizing DMVD, namely, the motion estimation based on the nearby template is done on an entire image included in bit stream Bs. Further, writing unit 136 may write the DMVD enabling flag as sps_DMVD_flag into a sequence parameter set (SPS) as illustrated in FIG. 13(ii). When the sps_DMVD_flag indicates the validity of the DMVD function, the processing for realizing DMVD is executed on an entire image included in the sequence related to SPS. Further, writing unit 136 may write the DMVD enabling flag as pps_DMVD_flag into a picture parameter set (PPS) as illustrated in FIG. 13(iii). When the pps_DMVD_flag indicates the validity of the DMVD function, the processing for realizing DMVD is executed on an entire image included in the picture related to PPS.

Further, writing unit 136 may write the DMVD enabling flag as slice_DMVD_flag into a slice header as illustrated in FIG. 13(iv). When the slice_DMVD_flag indicates the validity of the DMVD function, the processing for realizing DMVD is executed on the entire image included in a slice related to the slice header. Further, writing unit 136 may write the DMVD enabling flag as block_DMVD_flag into a coding unit as illustrated in FIG. 13(v). When the block_DMVD_flag indicates the validity of the DMVD function, the processing for realizing DMVD is executed on an entire image included in the coding unit.

Further, writing unit 136 may write a parameter representing a size of the candidate list (namely, a number of candidates included in the candidate list) as the DMVD parameter into bit stream Bs. In this case, when the number of the candidates included in the candidate list is larger than a threshold, the candidates of the nearby template are included in the candidate list. When the number of the candidates is the threshold or less, the candidates of the nearby template are not included in the candidate list. Therefore, the parameter indicating the size of the candidate list indicates whether the DMVD function for deriving the motion vector is enabled in the decoder. That is to say, writing unit 136 may write a value that represents whether the DMVD function is enabled as the DMVD parameter into bit stream Bs according to whether the value is larger than the predetermined threshold. As a result, the DMVD parameter can be used also as a parameter that represents a value to be used for a function other than the DMVD function, such as a size in a candidate list. Therefore, since the other parameters included in bit stream Bs can be used as the DMVD parameter, the coding efficiency can be further improved.

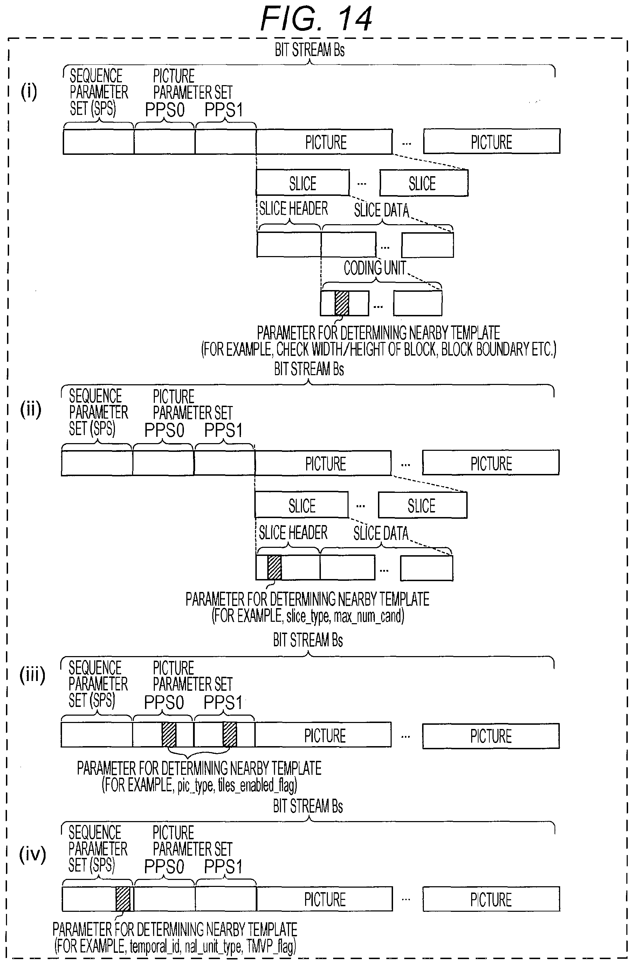

FIG. 14 is a diagram illustrating an example of positions of a parameter relating to selection of one nearby template from the plurality of predefined nearby templates. This parameter is an identification parameter for identifying the selected nearby template.

For example, writing unit 136 may write the parameter by coding unit as illustrated in FIG. 14(i). This parameter indicates, for example, a width and a height of the block (target block). Further, writing unit 136 may write the parameter into the slice header as illustrated in FIG. 14(ii). This parameter represents, for example, a slice type (slice_type) or a maximum number of motion vector prediction candidates included in the candidate list (max_num_cand).

Further, writing unit 136 may write the parameter into the picture parameter set as illustrated in FIG. 14(iii). This parameter represents, for example, a picture type (pic_type). Further, writing unit 136 may write the parameter into a sequence parameter set (SPS) as illustrated in FIG. 14(iv). This parameter indicates, for example, a hierarchy identifier (templral_id) or an NAL unit type (nal_unit_type) in time hierarchical coding.

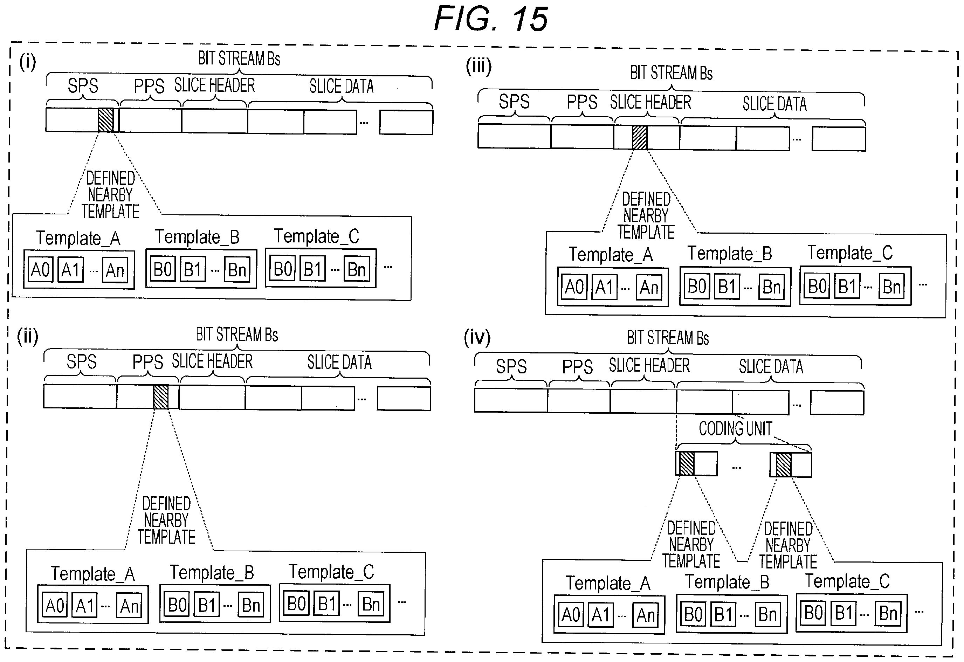

FIG. 15 is a diagram illustrating an example of positions of one or more parameters representing a plurality of predefined nearby templates. For example, one or more parameters indicating the plurality of predefined nearby templates are included in the sequence parameter set (SPS) or the picture parameter set (PPS) as illustrated in FIGS. 15(i) and 15(ii). Identification parameters explicitly or implicitly indicating the nearby templates selected in the respective blocks are included in the blocks so as to be transmitted. Further, one or more parameters that indicate the plurality of predefined nearby templates may be included in the slide header or the coding unit as illustrated in FIGS. 15(iii) and 15(iv).

Further, the plurality of predefined nearby templates may be shown in a lookout table or a classification table which is searched for a nearby template based on candidate indexes. For example, when a subset of a first selected nearby template is Template_A, a nearby template to be used for the motion estimation can be selected from the plurality of nearby templates to be candidates A0 to An in the subset.

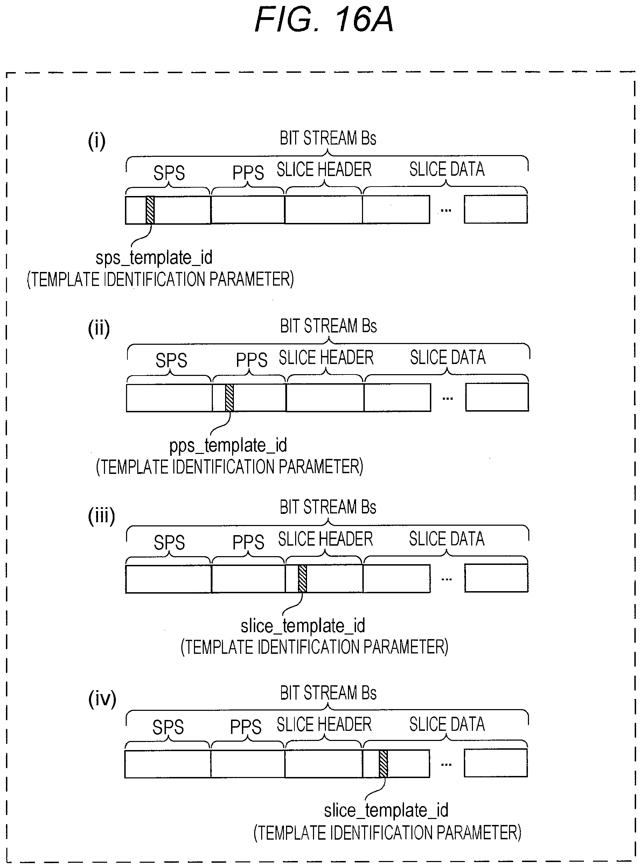

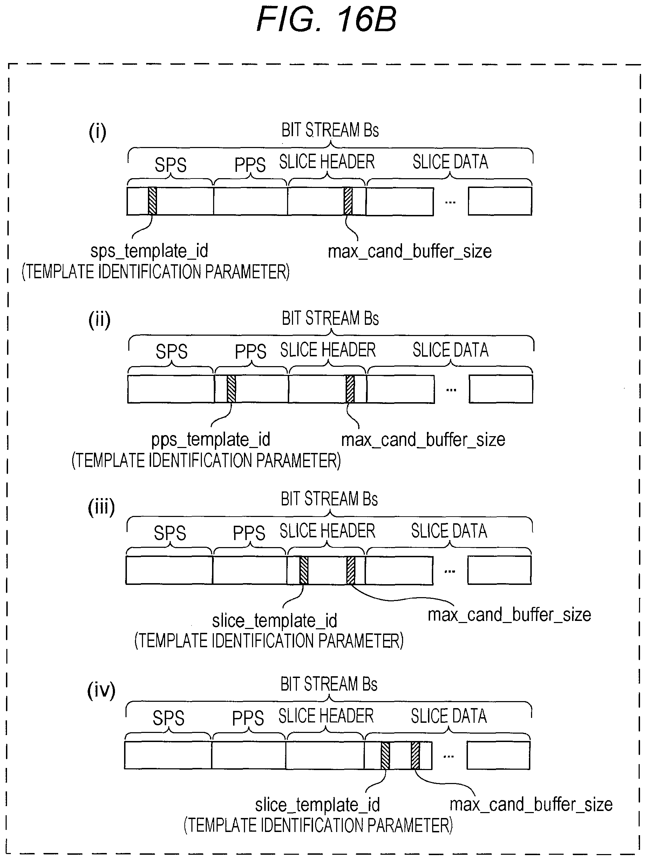

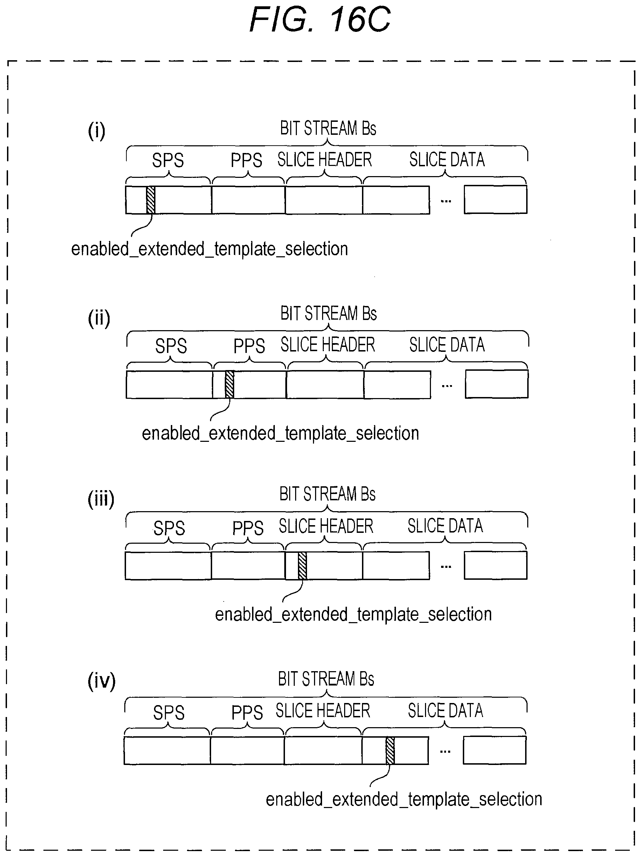

FIG. 16A to FIG. 16C are diagrams illustrating exemplary positions of parameters for selecting the nearby template. As illustrated in FIGS. 16A(i) to 16(iv), an authentication parameter (this parameter is enable when a nearby template is selected from the subset) for selecting one nearby template is an identification parameter for identifying a nearby template to be selected, and is particularly a parameter unique to the nearby template. This authentication parameter may be included as a template identification parameter in, for example, SPS, PPS, a slice header, or slice data. Further, as illustrated in FIGS. 16B(i) to 16B(iv), a parameter for identifying a subset may be included as a template identification parameter in, for example, SPS, PPS, the slice header, or the slice data. Further, a maximum candidate buffer size (max_cand_buffer_size) may be included as a template ID for determining a nearby template from the subset into the slice header or the slice data. Further, as illustrated in FIGS. 16C(i) to 16C(iv), a parameter for specifying the subset, namely, an extension template (enabled_extended_template_selection) may be explicitly included in, for example, SPS, PPS, the slice header, or the slice data.

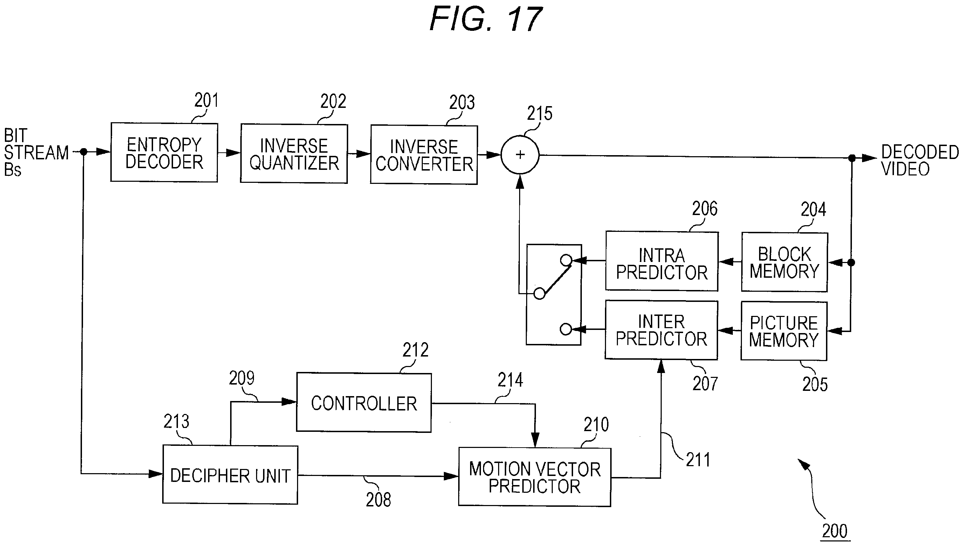

FIG. 17 is a block diagram illustrating an exemplary configuration of a decoding apparatus according to the present exemplary embodiment.

Decoding apparatus 200 decodes bit stream Bs representing a coded moving image in each block so as to output a decoded video. As illustrated in FIG. 17, decoding apparatus 200 includes entropy decoder 201, inverse quantizer 202, inverse converter 203, block memory 204, picture memory (also referred to as a frame memory) 205, intra predictor 206, inter predictor 207, motion vector predictor 210, controller 212, decipher unit 213, and adder 215.

Entropy decoder 201 entropy-decodes bit stream Bs, and outputs a plurality of quantization values obtained by the entropy decoding to inverse quantizer 202. Inverse quantizer 202 inversely quantizes the quantization values and outputs a plurality of frequency coefficients obtained by the inverse quantization to inverse converter 203. Inverse converter 203 inversely converts the plurality of frequency coefficients into a difference image formed by a plurality of pixel values (also called sample values) so as to output the difference image to adder 215. Adder 215 adds the difference image to prediction image output from inter predictor 207 or intra predictor 206 (namely, a prediction image for a block to be decoded), so as to generate a reconstructed image. Adder 215 outputs a decoded video formed by at least one reconstructed image in order to display the video, and outputs the generated reconstructed image to block memory 204 or picture memory 205 for further prediction.

Intra predictor 206 makes intra prediction using at least one reconstructed image stored in block memory 204, and a prediction image is generated for a block to be decoded (hereinafter, a target block) by the intra prediction. Inter predictor 207 compensates a motion based on a motion vector derived or selected by motion vector predictor 210. That is to say, inter predictor 207 obtains an image that is the most similar to an image of the target block (or a nearby template, described later), for example, from the reference picture that is stored in picture memory 205 and is formed by at least one reconstructed image based on the motion vector. As a result, the prediction image is generated.

Decipher unit 213 deciphers a plurality of parameters 209 from bit stream Bs, and outputs the plurality of deciphered parameters 209 to controller 212. These parameters 209 include a parameter indicating the plurality of predefined nearby templates, and an identification parameter indicating the selected nearby template. Parameters 209 may include an extension parameter indicating whether an extension template can be used. Decipher unit 213 may further output, to motion vector predictor 210, prediction information 208 that includes, for example, a candidate index, a reference index indicating a used reference picture, and a delta motion vector which are included in bit stream Bs.

Controller 212 identifies the plurality of predefined nearby templates based on a plurality of parameters 209 deciphered by decipher unit 213, and selects one nearby template from the plurality of nearby templates. When the motion vectors of the plurality of predefined nearby templates are included as motion vector prediction candidates in a candidate list, a parameter indicating the selected nearby template in the plurality of parameters 209 may be a candidate index in the candidate list. Controller 212 includes the parameter indicating the selected nearby template into signal 214 so as to output the parameter to motion vector predictor 210.

Motion vector predictor 210 derives at least one motion vector prediction candidate to be used for the candidate list. Motion vector predictor 210 selects one motion vector prediction candidate as motion vector prediction from the at least one motion vector prediction candidate included in the candidate list based on the candidate index included in prediction information 208. At this time, motion vector predictor 210 adds a delta motion vector to the selected motion vector prediction so as to derive a motion vector of the target block. Further, when controller 212 selects a nearby template, motion vector predictor 210 does the motion estimation based on the nearby template so as to derive the motion vector of the target block. Motion vector predictor 210, then, outputs signal 211 including the derived motion vector to inter predictor 207.

Decoding apparatus 200 in the present exemplary embodiment is a decoding apparatus that decodes bit stream Bs in each block, and includes decipher unit 213, a selector, a deriver, and a decoder.

Decipher unit 213 deciphers the identification parameter as the DMVD parameter from the bit stream. The selector is formed by controller 212, and selects one nearby template from N (N being an integer equal to or greater than 2) nearby templates that are predefined for the target block based on the deciphered DMVD parameter.

The deriver is formed by motion vector predictor 210, and derives a motion vector using a reconstructed image in a region represented by the selected nearby template and a reference picture different from a picture including the target block. The decoder is formed by at least one of inter predictor 207, entropy decoder 201, inverse quantizer 202, inverse converter 203, picture memory 205, and adder 215. That is to say, the decoder makes motion compensation on the target block using the derived motion vector so as to decode the target block.

As a result, when the DMVD parameter indicates that the DMVD function is enabled, one nearby template is selected from the N nearby templates predefined for the target block. Therefore, an appropriate nearby template can be selected for the target block, and a bit stream whose coding efficiency is improved can be appropriately decoded. Decipher unit 213 may decipher a value indicating whether the DMVD function is enabled as the DMVD parameter according to whether the value is larger than a predetermined threshold. As a result, the DMVD parameter can be used also as a parameter that represents a value to be used for a function other than the DMVD function, such as a size in a candidate list. Therefore, since the other parameters included in the bit stream can be used as the DMVD parameters, the bit stream whose coding efficiency is further improved can be appropriately decoded.

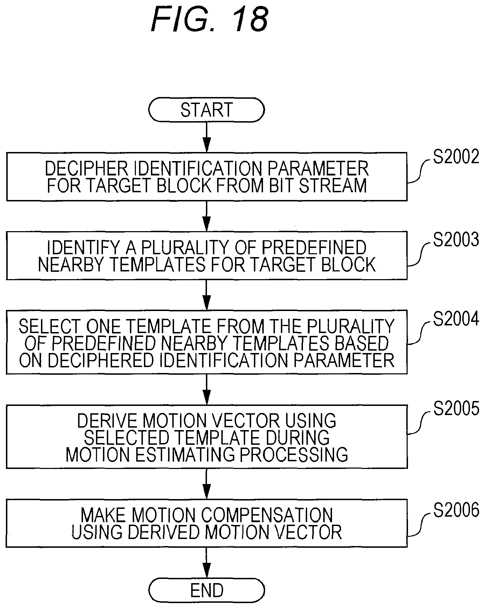

The decoding method, according to the present exemplary embodiment, for executing the motion estimating processing using a nearby template is described with reference to FIG. 18 to FIG. 20.

FIG. 18 is a flowchart illustrating one example of the decoding processing in the present exemplary embodiment. The decoding processing illustrated in the flowchart is related to the coding processing illustrated in the flowchart of FIG. 8.

Decipher unit 213 of decoding apparatus 200 deciphers an identification parameter for the target block from bit stream Bs at first step S2002. Controller 212 identifies a plurality of nearby templates predefined for the target block at step S2003. Thereafter, controller 212 selects one nearby template from the plurality of predefined nearby templates at step S2004 based on the identification parameter deciphered by decipher unit 213. Motion vector predictor 210 derives a motion vector using the selected nearby template during the motion search processing at step S2005. Inter predictor 207 makes the motion compensation using the derived motion vector at final step S2006. The target block is decoded by this motion compensation.

When the target block is decoded as a block included in a B picture or a B slice based on two reference picture lists at step S2005, the plurality of motion vectors is derived from the selected nearby template. Further, also when the target block is not included in the B picture nor the B slice, the plurality of motion vectors may be derived as candidates of the motion vector from the selected nearby template.

In the decoding processing illustrated in the flowchart of FIG. 18, since the identification parameter is deciphered from bit stream Bs, the nearby template used for coding the target block can be easily selected and used. Therefore, the target block can be appropriately decoded. One nearby template is selected at step S2004 based on the identification parameter, but one nearby template may be selected based on, for example, the predefined standard illustrated in the flowchart of FIG. 11 or FIG. 12.

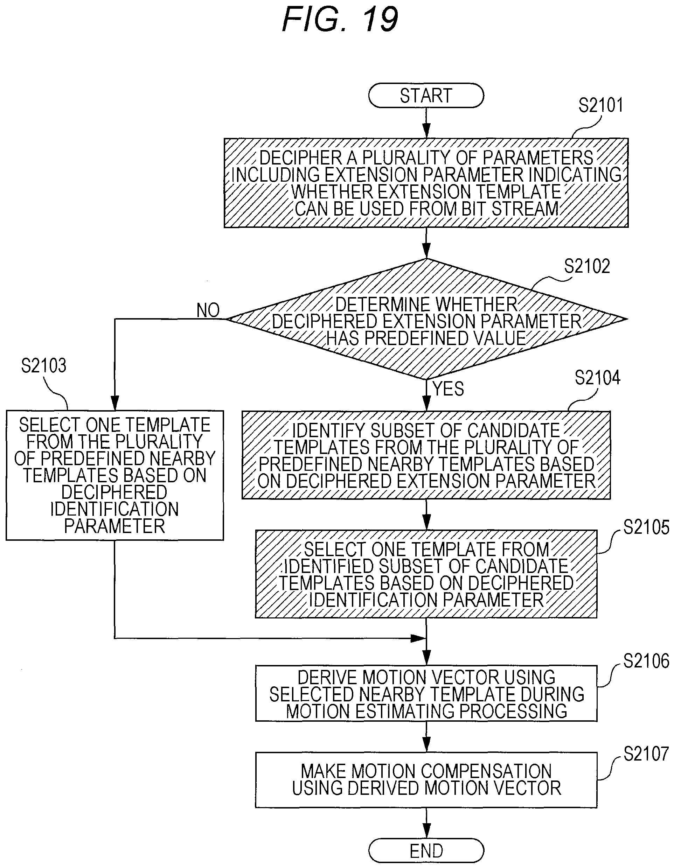

FIG. 19 is a flowchart illustrating another example of the decoding processing according to the present exemplary embodiment. The decoding processing illustrated in the flowchart is related to the coding processing illustrated in the flowchart of FIG. 9.

Decipher unit 213 of decoding apparatus 200 deciphers a plurality of parameters including an extension parameter indicating whether an extension template can be used and an identification parameter from bit stream Bs at first step S2101. Controller 212 determines whether the deciphered extension parameter has a predefined value at next step S2102. When the deciphered extension parameter has the predefined value (Yes at step S2102), controller 212 identifies a subset of candidate templates from the plurality of predefined nearby templates at step S2104 based on the deciphered extension parameter. Thereafter, controller 212 selects one candidate template (namely, a nearby template) from a plurality of candidate templates included in the identified subset at step S2105 based on the deciphered identification parameter.

On the other hand, when the deciphered extension parameter does not have a predefined value (No at step S2102) at step S2102, controller 212 selects one nearby template from the plurality of predefined nearby templates at step S2103 based on the deciphered identification parameter. At this time, controller 212 may select one nearby template based on, for example, the predefined standard illustrated in the flowcharts of FIG. 11 or FIG. 12.

Motion vector predictor 210 derives a motion vector for the target block using the selected nearby template at step S2106 during the motion estimating process. Inter predictor 207 makes the motion compensation using the derived motion vector at final step S2107.

In the decoding processing illustrated in the flowchart of FIG. 19, decoding apparatus 200 further deciphers an extension parameter indicating which subset is selected from a plurality of subsets each of which is formed by the plurality of nearby templates whose number is less than N or whether no subset is used as a value from bit stream Bs. When the extension parameter indicates the predetermined value in the selection of the nearby template, decoding apparatus 200 specifies a subset from the plurality of subsets according to the extension parameter. Further, decoding apparatus 200 selects one nearby template from M (M being an integer equal to or greater than 2 and smaller than N) nearby templates included in the specified subset in the N nearby templates. On the other hand, when the extension parameter does not indicate the predetermined value, decoding apparatus 200 selects one nearby template from the N nearby templates.

As a result, when a subset is used, one nearby template is selected from the M nearby templates whose number is smaller than the N, namely, a number of the plurality of nearby templates to be candidates of the nearby template to be selected reduces. For this reason, the processing load for the selection of the nearby templates can be reduced.

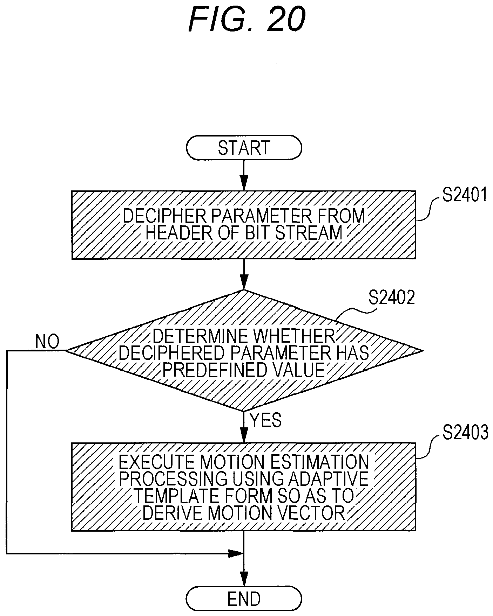

FIG. 20 is a flowchart illustrating still another example of the decoding processing according to the present exemplary embodiment. The decoding processing illustrated in the flowchart is related to the coding processing illustrated in the flowchart of FIG. 10.

Decipher unit 213 of decoding apparatus 200 deciphers, (as the DMVD parameter) from bit stream Bs, a parameter indicating whether an adaptive template form is used for the motion estimating processing in the decoder at first step S2401. Controller 212 determines whether the deciphered parameter has a predefined value at next step S2402. When the deciphered parameter has the predefined value (Yes at step S2402), motion vector predictor 210 executes the motion estimating processing using the adaptive template at step S2403 so as to derive the motion vector.

In the decoding processing illustrated in a flowchart of FIG. 20, decipher unit 213 deciphers a parameter, which indicates whether the nearby template is adaptively changed as a value, as the DMVD parameter. When the DMVD parameter indicates the predetermined value, controller 212 selects one nearby template from the N nearby templates according to a region of a reconstructed image generated around the target block at the time of decoding the target block. More specifically, controller 212 selects one nearby template from at least one nearby template where all reconstructed images in regions represented by the N nearby templates are generated at the time of decoding the target block.

As a result, the nearby template can be adaptively selected according to a decoding condition, namely, the dimension and the size of the nearby template can be adaptively changed. As a result, bit stream Bs whose coding efficiency is improved can be adaptively decoded.

Further, at step S2004 in FIG. 18 and at step S2105 in FIG. 19, controller 212 may select one nearby template based on, for example, the predefined standard illustrated in the flowchart of FIG. 11 or FIG. 12. As a result, one nearby template can be appropriately selected from the plurality of nearby templates to be candidates. Further, when such a method for selecting a nearby template is executed as a predefined standard also on the encoder side, the nearby template selected by the encoder can be appropriately selected.

In the decoding processing, some nearby templates assumed for the target block are illustrated in FIGS. 2 to 7. Since all the illustrated nearby templates are related to functionality of the motion vector deriving (DMVD) processing on the decoder side, they are expressed as the DMVD templates in the present exemplary embodiment. However, the DMVD templates are not limited to the examples illustrated in FIG. 2 to FIG. 7.

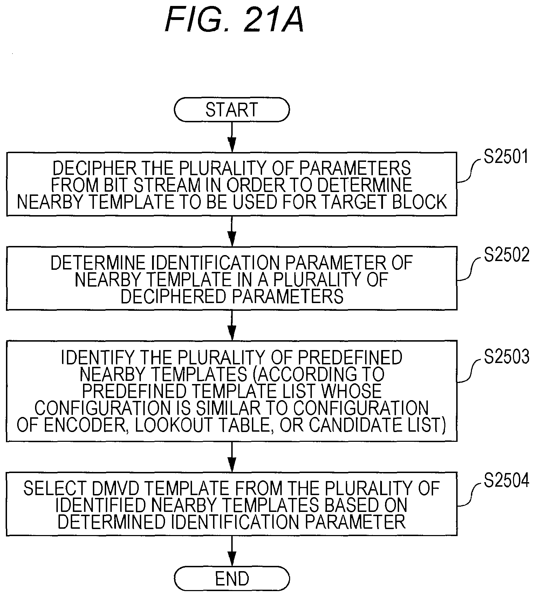

FIGS. 21A to 21F are flowcharts illustrating examples of the processing for selecting a DMVD template from the plurality of nearby templates based on the parameter deciphered from bit stream Bs.

For example, decoding apparatus 200 deciphers a plurality of parameters from bit stream Bs (step S2501) as shown in FIG. 21A so that a nearby template to be used for the target block is determined. Decoding apparatus 200 determines an identification parameter for identifying the nearby template in the plurality of deciphered parameters (step S2502). Decoding apparatus 200, then, identifies the plurality of predefined nearby templates according to, for example, a template list, a lookup table, or a candidate list predefined to be constructed in coding apparatus 100 (step S2503). Decoding apparatus 200 selects one nearby template (a DMVD template) from the plurality of identified nearby templates based on the identification parameter determined at step S2502 (step S2504).

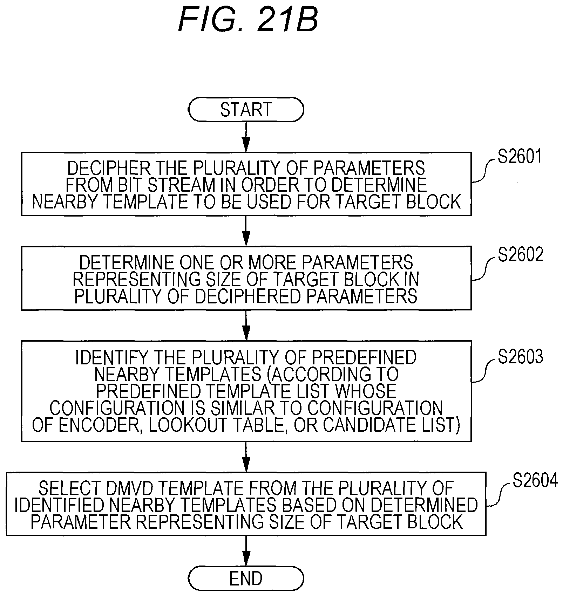

Further, decoding apparatus 200 may execute steps S2601 to S2604 as illustrated in FIG. 21 B. That is to say, decoding apparatus 200 determines a parameter indicating a size of the target block at step S2602 instead of the identification parameter. Decoding apparatus 200 selects one nearby template (a DMVD template) from the plurality of identified nearby templates at step S2604 based on the parameter indicating a determined size.

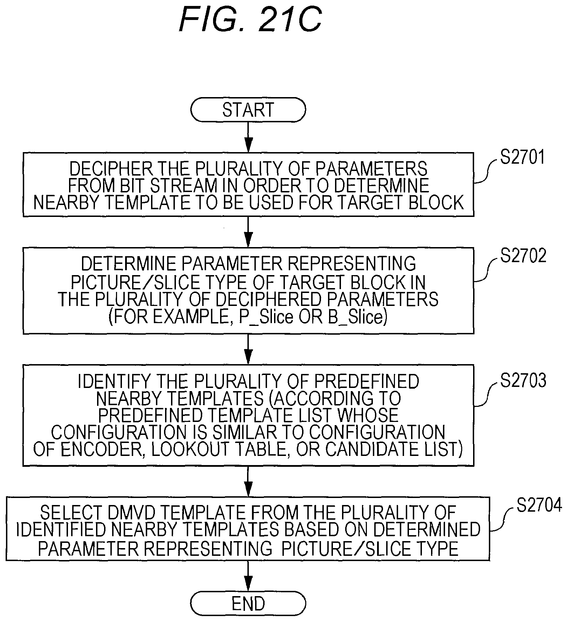

In another manner, decoding apparatus 200 may execute steps S2701 to S2704 as illustrated in FIG. 21C. That is to say, decoding apparatus 200 determines a parameter indicating a picture type or a slice type of the target block at step S2702 instead of the identification parameter. Decoding apparatus 200 selects one nearby template (a DMVD template) from the plurality of identified nearby templates at step S2704 based on the parameter indicating the determined picture type or slice type.

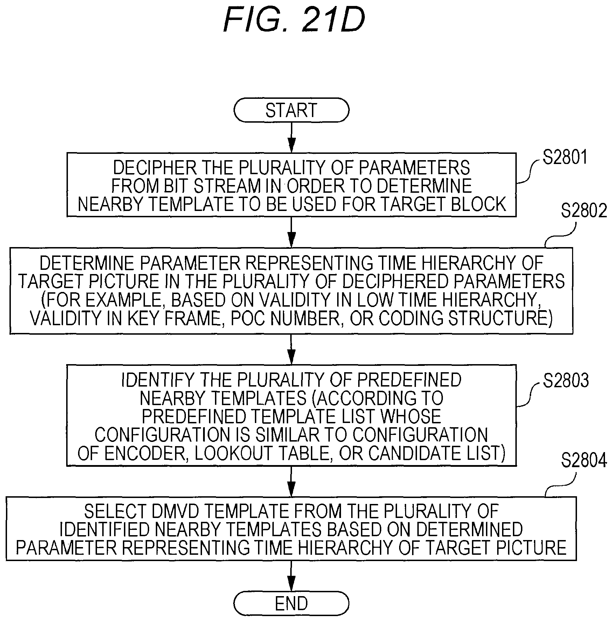

Further, decoding apparatus 200 may execute steps S2801 to S2804 as illustrated in FIG. 21 D. That is to say, decoding apparatus 200 determines a parameter indicating a time hierarchy of the target picture including the target block (a temporal ID) at step S2802 instead of the identification parameter. Decoding apparatus 200 selects one nearby template (a DMVD template) from the plurality of identified nearby templates at step S2804 based on the parameter indicating the determined time hierarchy.

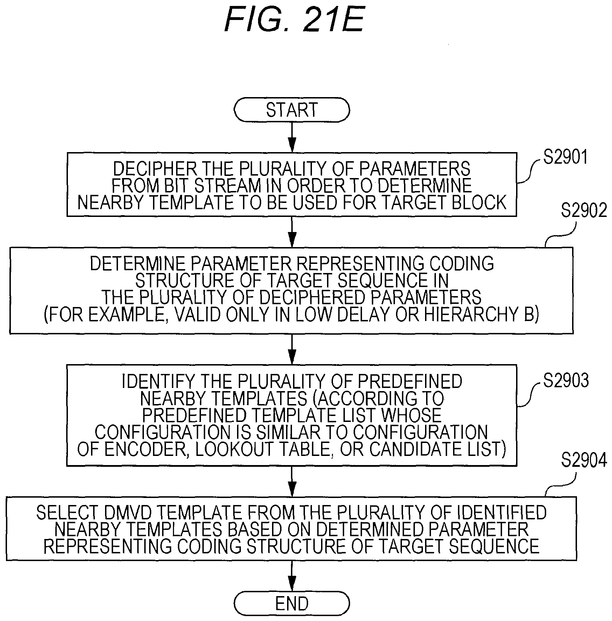

In another manner, decoding apparatus 200 may execute steps S2901 to S2904 as illustrated in FIG. 21 E. That is to say, decoding apparatus 200 determines a parameter indicating a coding structure of a target sequence including the target block at step S2902 instead of the identification parameter. Decoding apparatus 200 selects one nearby template (a DMVD template) from the plurality of identified nearby templates at step S2904 based on the parameter indicating the determined coding structure.

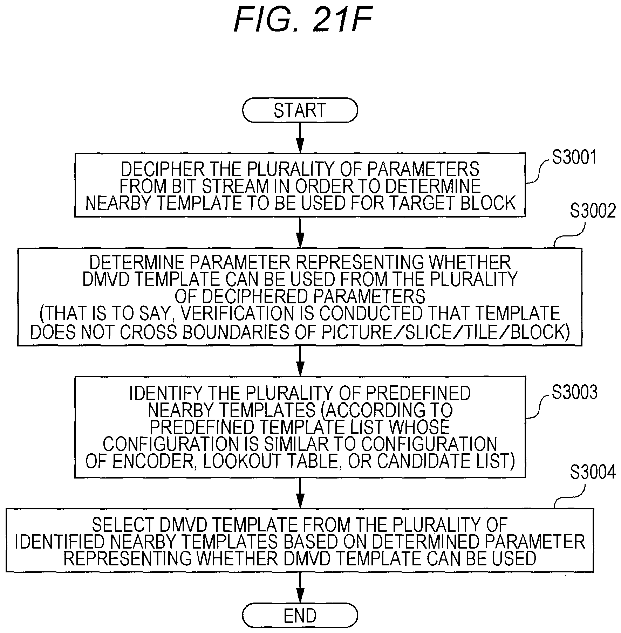

Further, decoding apparatus 200 may execute steps S3001 to S3004 as illustrated in FIG. 21 F. That is to say, decoding apparatus 200 determines a parameter indicating whether the DMVD template can be used (the DMVD parameter) at step S3002 instead of the identification parameter. Decoding apparatus 200 selects one nearby template (a DMVD template) from the plurality of identified nearby templates at step S3004 based on the determined parameter indicating whether the DMVD template can be used.

The flowcharts in FIG. 21A to FIG. 21F illustrate an exemplary processing for selecting the DMVD template based on some assumed parameters. Not limited to these exemplary parameters, but the DMVD parameter may be selected based on another parameter.

Further, in the flowcharts in FIG. 21A to FIG. 21F, a nearby template to be selected, namely, the DMVD template is selected based on an implicit parameter. The implicit parameter may be used as the DMVD parameter that represents whether the DMVD function that is a function for deriving a motion vector in the decoder is enabled. For example, the implicit parameter is a parameter indicating a size of a target block, a parameter indicating a slice type, or a parameter indicating a time hierarchy (temporal ID).

That is to say, the DMVD parameter in the bit stream is an implicit parameter that can determine whether the DMVD function is enabled based on a predefined determining system. For example, the implicit parameter is a parameter indicating a slice type. In this case, when the parameter indicates a specific type of a slice, decoding apparatus 200 determines that the DMVD function is enabled. In another manner, the implicit parameter is a parameter indicating a size of the target block. In this case, decoding apparatus 200 compares the size of the target block with a predefined size so as to determine whether the DMVD function is enabled. In another manner, the implicit parameter is a temporal ID of the picture in the time hierarchical coding. In this case, decoding apparatus 200 compares the temporal ID with a predefined threshold so as to determine whether the DMVD function is enabled.

The coding method and the decoding method of the present invention have been described based on the exemplary embodiment, but the present invention is not limited to the present exemplary embodiment. Various modifications to the present exemplary embodiment that can be conceived by a person skilled in the art, and a mode configured by combining components in different exemplary embodiments may be included within a scope of the present invention as long as they do not deviate from the subject matter of the present invention.

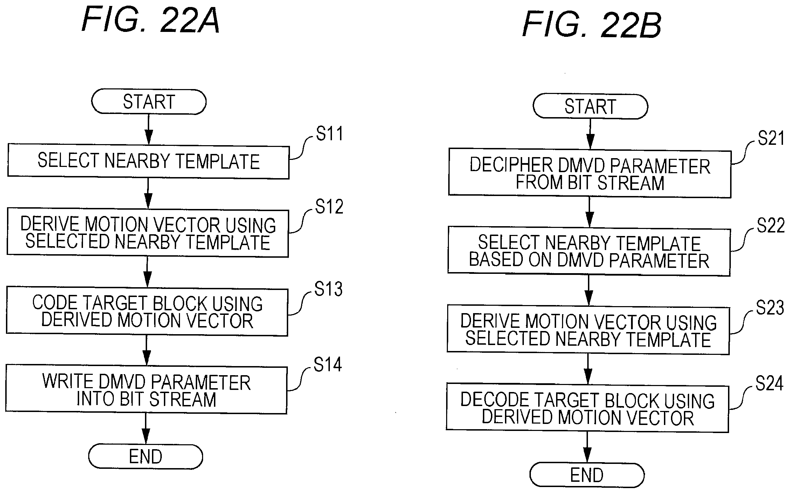

For example, the coding method and the decoding method illustrated in FIG. 22A and FIG. 22B are also included in the present invention.

FIG. 22A is a flowchart illustrating one example of the coding method according to one embodiment of the present invention.

The coding method for coding a moving image in each block includes step S11 of selecting one nearby template from N (N being an integer equal to or greater than 2) nearby templates that are predefined for a target block and represent different regions spatially adjacent to the target block, step S12 of deriving a motion vector using a reconstructed image in a region represented by the selected nearby template and a reference picture different from a picture including the target block, step S13 of compensating a motion for the target block using the derived motion vector so as to code the target block, and step S14 of writing a DMVD parameter representing whether a DMVD function that derives the motion vector in a decoder is enabled into a bit stream including the coded target block.

As a result, an effect similar to that in the above exemplary embodiment can be produced. That is to say, the coding efficiency can be improved.

FIG. 22B is a flowchart illustrating one example of the decoding method according to one exemplary embodiment of the present invention.

The decoding method for decoding a bit stream representing a coded moving image in each block includes step S21 of deciphering a DMVD parameter representing whether a DMVD function for deriving a motion vector in a decoder is enabled from the bit stream, step S22 of selecting one nearby template from N (N being an integer equal to or greater than 2) nearby templates that are predefined for a target block and represent different regions spatially adjacent to the target block based on the deciphered DMVD parameter, step S23 of deriving a motion vector using a reconstructed image in a region represented by the selected nearby template and a reference picture different from a picture including the target block, and step S24 of compensating a motion for the target block using the derived motion vector so as to decode the target block.

As a result, an effect similar to that in the above exemplary embodiment can be produced. That is to say, the bit stream in which the coding efficiency is improved can be appropriately decoded.

In the above exemplary embodiment, the respective components may be configured by special hardware or may be realized by executing software programs suitable for the components. The components may be realized by a manner such that a program executor such as a CPU or a processor reads and executes software programs recorded in a recording medium such as a hard disk or a semiconductor memory. The software that realizes the coding apparatus and the decoding apparatus according to the exemplary embodiment allows a computer to execute respective steps illustrated in FIG. 22A or FIG. 22B.

### SECOND EXEMPLARY EMBODIMENT

The processing described in the exemplary embodiment above can be implemented easily in a standalone computer system by recording a program for implementing the configuration of a video coding method (image coding method) or video decoding method (image decoding method) described in the exemplary embodiment on a storage medium. The storage medium may be any given type of medium capable of storing the program, such as a magnetic disk, an optical disc, a magneto-optical disk, an IC (Integrated Circuit) card, or a semiconductor memory.

Now, exemplary applications of the video coding method (image coding method) or the video decoding method (image decoding method) described in the exemplary embodiment and systems using them will be further described. The systems include an image coding/decoding apparatus which includes an image coding apparatus that employs the image coding method and an image decoding apparatus that employs the image decoding method. Other configurations of the systems can be changed as appropriate in accordance with the circumstances.

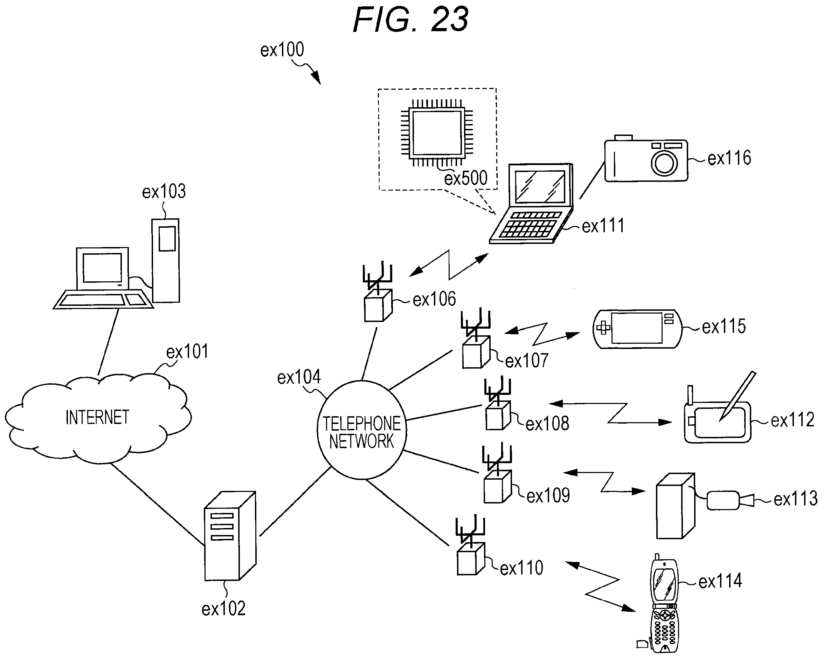

FIG. 23 is a diagram illustrating an overall configuration of content providing system ex100 that implements content distribution services. An area in which communication services are provided is divided into cells of a desired size. Base stations ex106, ex107, ex108, ex109, and ex110, which are fixed wireless stations, are installed in the respective cells.

In this content providing system ex100, various devices, such as computer ex111, PDA (Personal Digital Assistant) ex112, camera ex113, mobile phone ex114, game machine ex115 are connected to Internet ex101 via Internet service provider ex102, telephone network ex104, and base stations ex106 to ex110.

Note that the configuration of content providing system ex100 is not limited to the configuration illustrated in FIG. 23, and any given combination of the elements may be connected. Also, the individual devices may be directly connected to telephone network ex104 instead of via base stations ex106 to ex110 which are fixed wireless stations. Alternatively, the individual devices may be directly interconnected via near field communication or the like.

Camera ex113 is a device capable of capturing moving images, such as a digital camcorder. Camera ex116 is a device capable of capturing still images and moving images, such as a digital camera. Also, mobile phone ex114 may be any of a mobile phone based on the GSM (registered trademark) (Global System for Mobile Communications) scheme, CDMA (Code Division Multiple Access) scheme, W-CDMA (Wideband-Code Division Multiple Access) scheme, LTE (Long Term Evolution) scheme, or HSPA (High Speed Packet Access) scheme; a PHS (Personal Handyphone System); and so forth.

In content providing system ex100, camera ex113 or the like is connected to streaming server ex103 via base station ex109 and telephone network ex104. In this way, live streaming is implemented. During live streaming, the coding processing is performed on content (for example, video of a music event) obtained by the user using camera ex113 in a manner as described in the above-described exemplary embodiment (that is, camera ex113 functions as an image coding apparatus according to one aspect of the present invention) and the resulting content is transmitted to streaming server ex103. Streaming server ex103 in turn distributes the received content as a stream to a client that has made a request. Examples of the client include computer ex111, PDA ex112, camera ex113, mobile phone ex114, and game machine ex115 capable of decoding the data that has undergone the coding processing. Each device that has received the distributed data performs the decoding processing on the received data to reproduce the data (that is, the device functions as an image decoding apparatus according to one aspect of the present invention).

Note that the coding processing may be performed on the obtained data by camera ex113, by streaming server ex103 that performs data transmission processing, or by both of them on a processing-sharing basis. Similarly, the decoding processing may be performed on the distributed data by the client, by streaming server ex103, or by both of them on a processing-sharing basis. Also, in addition to still and/or moving image data obtained by camera ex113, still and/or moving image data obtained by camera ex116 may be transmitted to streaming server ex103 via computer ex111. In this case, the coding processing may be performed by any of camera ex116, computer ex111, and streaming server ex103, or by all of them on a processing-sharing basis.

The coding processing and the decoding processing are performed in general by LSI ex500 included in computer ex111 or each device. LSI ex500 may be formed as a single chip or a plurality of chips. Alternatively, software for video coding/decoding may be recorded on a recording medium (such as a CD-ROM, a flexible disk, or a hard disk) that is readable by computer ex111 or the like, and the coding processing and the decoding processing may be performed using the software. Further, in the case where mobile phone ex114 is equipped with a camera, moving image data obtained with the camera may be transmitted. This moving image data is data that has been coded by LSI ex500 included in mobile phone ex114.

Also, streaming server ex103 may be constituted by a plurality of servers or a plurality of computers that process, record, and distribute data in a distributed manner.

In the above-described manner, content providing system ex100 allows the client to receive and reproduce coded data. Accordingly, content providing system ex100 allows the client to receive, decode, and reproduce information transmitted by a user in real time, and thus allows a user not having a special right or equipment to implement personal broadcasting.

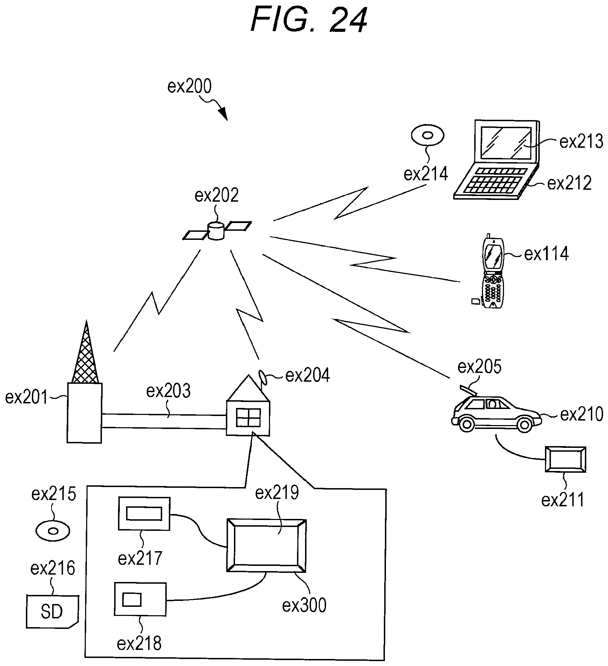

In addition to the example of content providing system ex100, at least one of the video coding apparatus (image coding apparatus) and the video decoding apparatus (image decoding apparatus) according to the above-described exemplary embodiment can be incorporated in digital broadcasting system ex200 as illustrated in FIG. 24. Specifically, broadcasting station ex201 transmits a radio wave of multiplexed data obtained by multiplexing video data, music data, and the like, via communication to broadcasting satellite ex202. This video data is data coded using the video coding method described in the above-described exemplary embodiment (that is, data coded by the image coding apparatus according to one aspect of the present invention). Upon receipt of this data, broadcasting satellite ex202 transmits a broadcasting radio wave, and home antenna ex204 capable of receiving satellite broadcasting receives this radio wave. An apparatus such as television (receiver) ex300 or set top box (STB) ex217 decodes and reproduces the received multiplexed data (that is, the apparatus functions as the image decoding apparatus according to one aspect of the present invention).

Also, the video decoding apparatus or the video coding apparatus described in the above-described exemplary embodiment can be implemented in reader/recorder ex218 that reads and decodes the multiplexed data recorded on recording medium ex215 such as a DVD (Digital Versatile Disc) or a BD (Blu-ray Disc); or that codes a video signal and further multiplexes a music signal with the video signal depending on circumstances, and writes the resulting signal on recording medium ex215. In this case, the reproduced video signal is displayed on monitor ex219, and the video signal can be reproduced by another apparatus or system using recording medium ex215 having the multiplexed data recorded thereon. Alternatively, the video decoding apparatus may be implemented in set top box ex217 connected to cable ex203 for cable television or home antenna ex204 for satellite/terrestrial broadcasting, and the video signal may be displayed on monitor ex219 of television ex300. At this time, the video decoding apparatus may be incorporated into television ex300 instead of set top box ex217.

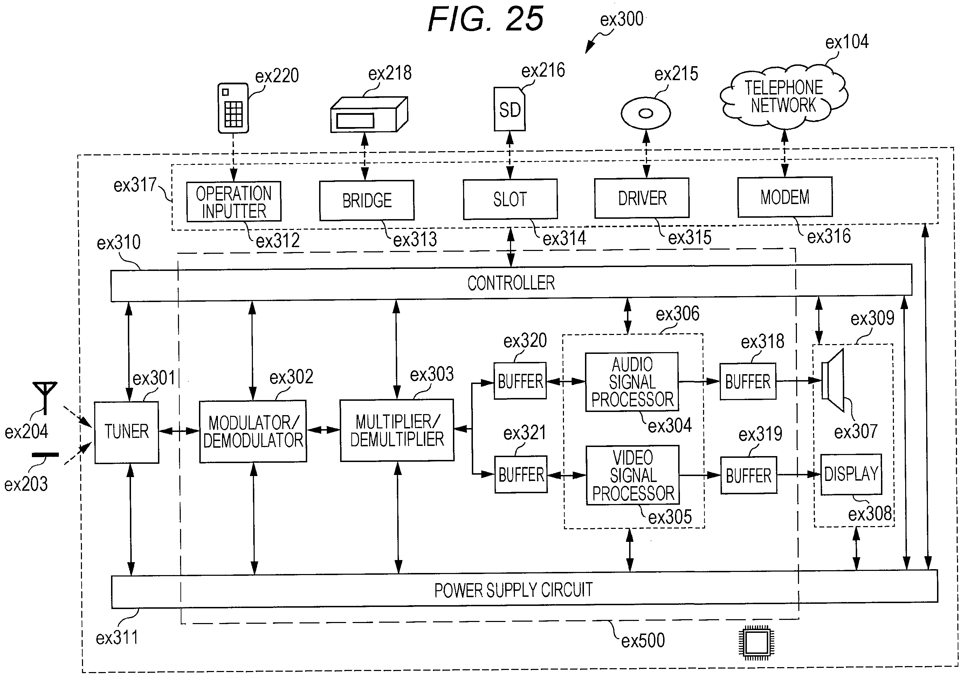

FIG. 25 is a diagram illustrating television (receiver) ex300 that employs the video decoding method and the video coding method described in the exemplary embodiment. Television ex300 includes tuner ex301 that obtains or outputs, via antenna ex204 or cable ex203 that receives broadcasting, multiplexed data in which video data and audio data are multiplexed together; modulator/demodulator ex302 that performs demodulation on the received multiplexed data or modulation on multiplexed data to be transmitted to outside; and multiplexer/demultiplexer ex303 that demultiplexes the demodulated multiplexed data into video data and audio data, or multiplexes video data and audio data that have been coded by signal processor ex306.

Television ex300 also includes signal processor ex306 and outputter ex309. Signal processor ex306 includes audio signal processor ex304 that decodes or codes audio data, and video signal processor ex305 that decodes or codes video data (video signal processor ex305 functions as the image coding apparatus or the image decoding apparatus according to one aspect of the present invention). Outputter ex309 includes speaker ex307 that outputs the decoded audio signal, and display ex308, such as a display, that displays the decoded video signal. Television ex300 further includes interface ex317 which includes operation inputter ex312 that accepts input of a user operation. Television ex300 further includes controller ex310 that controls the individual units in an integrated manner, and power supply circuit ex311 that supplies electric power to the individual units. Interface ex317 may include bridge ex313 to be connected to an external device, such as reader/recorder ex218; slot ex314 that enables connection of recording medium ex216 such as an SD card; driver ex315 for connection to external recording medium ex215, such as a hard disk; and modem ex316 for connection to telephone network ex104 as well as operation inputter ex312. Note that recording medium ex216 is capable of electrically storing information by using a nonvolatile/volatile semiconductor memory included therein. The individual units of television ex300 are connected to one another via a synchronization bus.

First, a configuration that allows television ex300 to decode and reproduce multiplexed data obtained from outside with antenna ex204 or the like will be described. Television ex300 receives a user operation from remote control ex220 or the like. Based on control performed by controller ex310 including a CPU or the like, multiplexer/demultiplexer ex303 demultiplexes multiplexed data that has been demodulated by modulator/demodulator ex302. Further, in television ex300, audio signal processor ex304 decodes the separated audio data and video signal processor ex305 decodes the separated video data by using the image decoding method described in the above exemplary embodiment. Further, the decoded audio signal and video signal are output to outside from outputter ex309. When the audio signal and the video signal are output, these signals may be temporarily stored in buffers ex318 and ex319 or the like so that they are reproduced in synchronization with each other. Also, television ex300 may read multiplexed data from recording media ex215 and ex216 such as a magnetic/optical disc and an SD card as well as from broadcasting. Next, a configuration that allows television ex300 to code an audio signal and a video signal and to transmit the resulting signals to outside or write the resulting signals on a recording medium or the like will be described. Television ex300 receives a user operation from remote control ex220 or the like. Based on control performed by controller ex310, audio signal processor ex304 codes the audio signal, and video signal processor ex305 codes the video signal by using the image coding method described in the above exemplary embodiment. The coded audio signal and video signal are multiplexed by multiplexer/demultiplexer ex303 and the resulting multiplexed signal is output to outside. When the audio signal and the video signal are multiplexed, these signals may be temporarily stored in buffers ex320 and ex321 or the like so that they are synchronized with each other. Note that a plurality of buffers may be provided as illustrated as buffers ex318, ex319, ex320, and ex321; or one or more buffers may be shared. Further, in addition to the illustrated buffers, for example, data may be stored in a buffer that serves as a buffering member for avoiding an overflow or underflow in the system between modulator/demodulator ex302 and multiplexer/demultiplexer ex303 or the like.

Television ex300 may also include a configuration for receiving audio/video input of a microphone or a camera in addition to the configuration for obtaining audio data and video data from broadcasting, a recording medium, or the like; and may perform the coding processing on the data obtained therefrom. Although television ex300 has been described as the configuration capable of performing the above-described coding processing, multiplexing, and outputting to outside, television ex300 may be a configuration incapable of performing these pieces of processing and only capable of the reception, decoding processing, and outputting to outside.

In the case where multiplexed data is read from and written to a recording medium by reader/recorder ex218, the decoding processing or the coding processing may be performed by television ex300, by reader/recorder ex218, or by both television ex300 and reader/recorder ex218 on a processing-sharing basis.

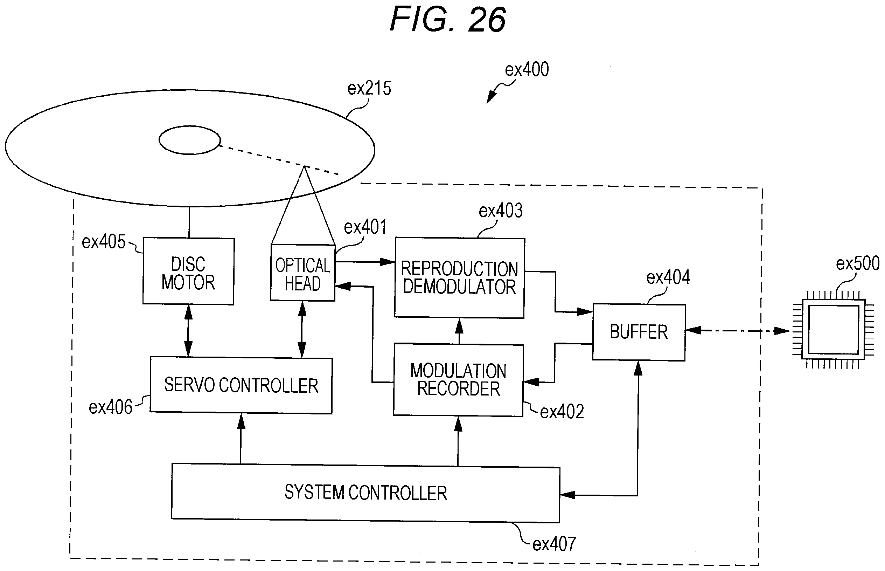

FIG. 26 illustrates an example of a configuration of information reproducer/recorder ex400 in the case of reading data from and writing data to an optical disc. Information reproducer/recorder ex400 includes optical head ex401, modulation recorder ex402, reproduction demodulator ex403, buffer ex404, disc motor ex405, survo controller ex406, and system controller ex407. Optical head ex401 irradiates a recording surface of recording medium ex215, which is an optical disc, with a laser spot to write information thereon; and detects reflected light from the recording surface of recording medium ex215 to read information. Modulation recorder ex402 electrically drives a semiconductor laser included in optical head ex401 to modulate a laser beam in accordance with to-be-recorded data. Reproduction demodulator ex403 amplifies a reproduced signal which is obtained by electrically detecting reflected light from the recording surface by a photodetector included in optical head ex401, separates and demodulates signal components recorded on recording medium ex215, and reproduces necessary information. Buffer ex404 temporarily stores information to be recorded on recording medium ex215 and information reproduced from recording medium ex215. Disc motor ex405 rotates recording medium ex215. Survo controller ex406 moves optical head ex401 to a certain information track while controlling rotational driving of disc motor ex405 to perform laser spot tracking processing. System controller ex407 controls information reproducer/recorder ex400. The above-described reading processing and writing processing are implemented as a result of system controller ex407 performing recording/reproduction of information via optical head ex401 while causing modulation recorder ex402, reproduction demodulator ex403, and survo controller ex406 to operate in cooperation with one another and using various pieces of information held in buffer ex404 and generating/adding new information as needed. System controller ex407 includes, for example, a microprocessor and performs the pieces of processing by executing a read/write program.

Although optical head ex401 that irradiates the recording surface with a laser spot has been described above, optical head ex401 may include a configuration for performing high-density recording using near field light.

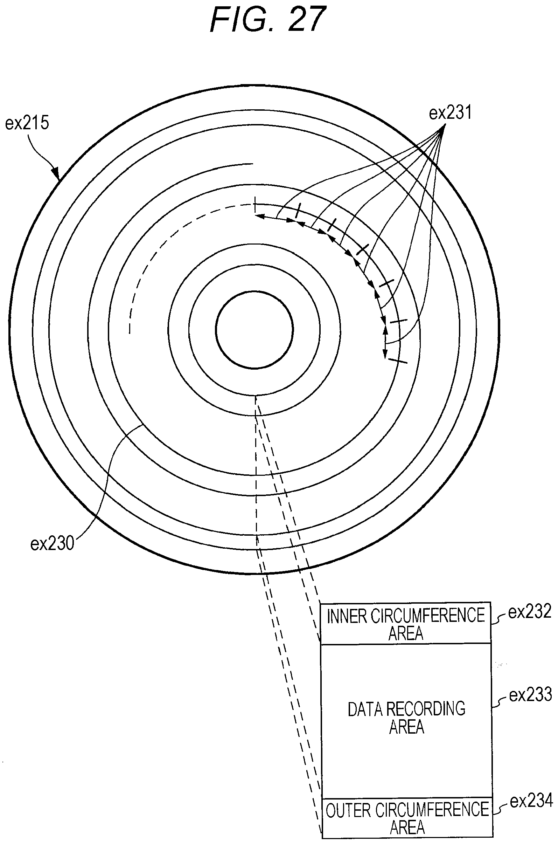

FIG. 27 is a schematic diagram of recording medium ex215 which is an optical disc. On the recording surface of recording medium ex215, a guide groove (groove) is spirally formed. In information track ex230, address information that represents an absolute position on the disc is pre-recorded by a change in the shape of the groove. This address information includes information identifying positions of recording blocks ex231 which are units in which data is recorded. A recording/reproducing apparatus can identify a recording block by reproducing information track ex230 and reading the address information. Also, recording medium ex215 includes data recording area ex233, inner circumference area ex232, and outer circumference area ex234. Data recording area ex233 is an area used for recording user data. Inner circumference area ex232 and outer circumference area ex234 that are located on the inner side and the outer side of data recording area ex233, respectively, are used for purposes other than recording of user data. Information reproducer/recorder ex400 performs reading/writing of coded audio data, coded video data, or multiplexed data of these pieces of data on data recording area ex233 of recording medium ex215 thus configured.

The description has been given using a single-layer optical disc such as a DVD or BD by way of example above, the optical disc used is not limited to such a disc and may be a multi-layered optical disc for which recording can be performed on part other than the surface. Alternatively, the optical disc used may be an optical disc on which multi-dimensional recording/reproduction can be performed by recording information at the same position of the disc using light of various waveforms different from one another, by recording information on different layers at various angles, or the like.

In addition, in digital broadcasting system ex200, data may be received by vehicle ex210 equipped with antenna ex205 from broadcasting satellite ex202 or the like and a moving image may be reproduced on a display device of car navigation system ex211 mounted on vehicle ex210. Note that the configuration illustrated in FIG. 25 additionally including a GPS receiver is conceivable as the configuration of car navigation system ex211, and the same applies to computer ex111, mobile phone ex114, or the like.

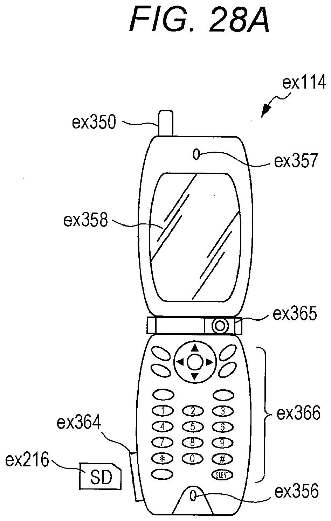

FIG. 28A is a diagram illustrating mobile phone ex114 that employs the video decoding method and the video coding method described in the above exemplary embodiments. Mobile phone ex114 includes antenna ex350 that transmits and receives a radio wave to and from base station ex110; camera ex365 capable of capturing video and still images; and display ex358, such as a liquid crystal display, that displays the video captured by camera ex365 and data obtained by decoding video or the like received with antenna ex350. Mobile phone ex114 further includes a body including operation key ex366; audio outputter ex357 such as a speaker for outputting audio; audio inputter ex356 such as a microphone for inputting audio; memory ex367 that stores coded data or decoded data of captured video, captured still images, recorded audio, received video, received still images, or received emails; and slot ex364 which is an interface to a recording medium which similarly stores data thereon.

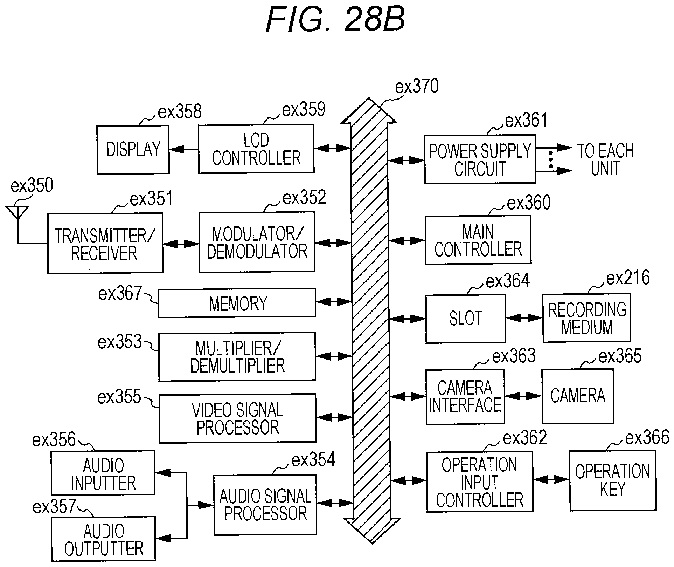

Further, an example of a configuration of mobile phone ex114 will be described with reference to FIG. 28B. Mobile phone ex114 includes main controller ex360 that controls individual units of the body which includes display ex358 and operation key ex366 in an integrated manner. Mobile phone ex114 also includes power supply circuit ex361, operation input controller ex362, video signal processor ex355, camera interface ex363, LCD (Liquid Crystal Display) controller ex359, modulator/demodulator ex352, multiplexer/demultiplexer ex353, audio signal processor ex354, slot ex364, and memory ex367 which are connected to main controller ex360 via bus ex370.

When an on-hook/power key is turned on through a user operation, power supply circuit ex361 supplies electric power to individual units from a battery pack to activate mobile phone ex114 into an operable state.

In mobile phone ex114, in a voice call mode, audio signal processor ex354 converts an audio signal obtained by audio inputter ex356 into a digital audio signal, modulator/demodulator ex352 performs spread spectrum processing on this digital audio signal, and transmitter/receiver ex351 performs digital-to-analog conversion processing and frequency conversion processing on this signal and then transmits the resulting signal via antenna ex350 in accordance with control performed by main controller ex360 which includes a CPU, a ROM, and a RAM. Also, in mobile phone ex114, in the voice call mode, transmitter/receiver ex351 amplifies reception data received via antenna ex350 and performs frequency conversion processing and analog-to-digital conversion processing, modulator/demodulator ex352 performs spread spectrum processing on the resulting signal, audio signal processor ex354 converts the resulting signal into an analog audio signal. The analog audio signal is then output from audio outputter ex357.

In the case where an email is transmitted in a data communication mode, text data of the email input through operation of operation key ex366 of the body or the like is sent to main controller ex360 via operation input controller ex362. Main controller ex360 performs control such that modulator/demodulator ex352 performs spread spectrum processing on the text data and transmitter/receiver ex351 performs digital-to-analog conversion processing and frequency conversion processing on the text data and then transmits the resulting text data to base station ex110 via antenna ex350. In the case of receiving an email, substantially the opposite processing is performed on the received data, and the resulting text data is output to display ex358.

In the case where video, a still image, or a combination of video and audio are transmitted in the data communication mode, video signal processor ex355 compresses and codes a video signal supplied from camera ex365 by using the video coding method described in each of the above exemplary embodiments (that is, video signal processor ex355 functions as the image coding apparatus according to one aspect of the present invention), and sends the coded video data to multiplexer/demultiplexer ex353. Also, audio signal processor ex354 codes an audio signal obtained by audio inputter ex356 while the video, still image, or the like is being captured by camera ex365, and sends the coded audio data to multiplexer/demultiplexer ex353.

Multiplexer/demultiplexer ex353 multiplexes the coded video data supplied from video signal processor ex355 and the coded audio data supplied from audio signal processor ex354 in accordance with a certain scheme. Modulator/demodulator (modulation/demodulation circuit) ex352 performs spread spectrum processing on the resulting multiplexed data. Transmitter/receiver ex351 performs digital-to-analog conversion processing and frequency conversion processing on the multiplexed data, and then transmits the resulting data via antenna ex350.

In the case of receiving data of a moving image file linked to a website or the like or an email attached with video or audio in the data communication mode, multiplexer/demultiplexer ex353 demultiplexes multiplexed data into a bit stream of video data and a bit stream of audio data in order to decode the multiplexed data received via antenna ex350. Multiplexer/demultiplexer ex353 supplies the coded video data to video signal processor ex355 and the coded audio data to audio signal processor ex354 via synchronization bus ex370. Video signal processor ex355 performs decoding using a video decoding method corresponding to the video coding method described in the above exemplary embodiment to decode the video signal (that is, video signal processor ex355 functions as the image decoding apparatus according to one aspect of the present invention). Then, for example, video or still image included in the moving image file linked to the website is displayed on display ex358 via LCD controller ex359. Also, audio signal processor ex354 decodes the audio signal, and the resulting audio is output by audio outputter ex357.

Like television ex300, three implementation forms, that is, a transmission/reception terminal including both an encoder and a decoder, a transmission terminal only including an encoder, and a reception terminal only including a decoder, are conceivable for a terminal such as mobile phone ex114. Further, the case has been described in which multiplexed data in which video data, audio data, and so forth are multiplexed is received and transmitted in digital broadcasting system ex200; however, the multiplexed data may be data in which text data related to the video is multiplexed other than audio data or video data alone may be used instead of the multiplexed data.

As described above, the video coding method or the video decoding method described in the above exemplary embodiment is applicable to any of the aforementioned devices and systems. In such a way, advantages described in the above exemplary embodiment can be obtained.

Also, the present invention is not limited to the exemplary embodiment above, and various modifications and corrections can be made without departing from the scope of the present invention.

### THIRD EXEMPLARY EMBODIMENT

Video data can also be generated by switching between the video coding method or apparatus described in each of the above exemplary embodiments and a video coding method or apparatus based on a different standard, such as MPEG-2, MPEG-4 AVC, or VC-1 as appropriate.

In the case where a plurality of pieces of video data based on different standards are generated, a decoding method corresponding to each of the standards needs to be selected at the time of decoding. However, because which standard the to-be-decoded video data is based on is not identifiable, it is challenging to select an appropriate decoding method.

To deal with such a challenge, multiplexed data in which audio data or the like is multiplexed with video data is configured to include identification information that indicates which standard the video data is based on. A specific structure of multiplexed data including video data that is generated using the video coding method or apparatus described in each of the above exemplary embodiments will be described below. Multiplexed data is a digital stream in the MPEG-2 transport stream formant.

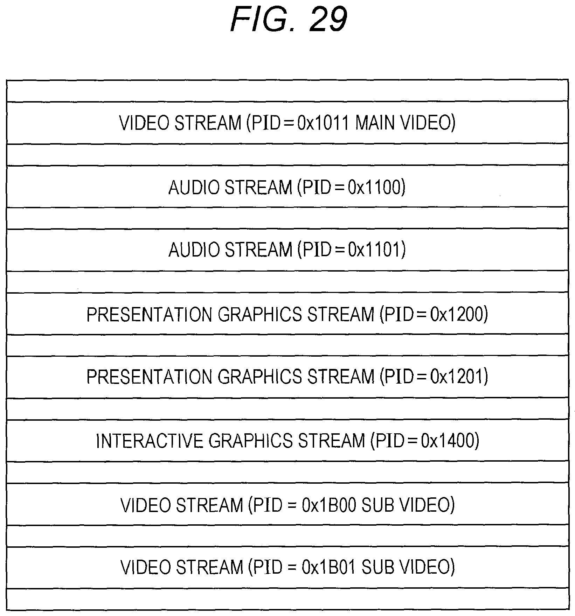

FIG. 29 is a diagram illustrating a structure of multiplexed data. As illustrated in FIG. 29, multiplexed data is obtained by multiplexing one or more of a video stream, an audio stream, a presentation graphics stream (PG), and an interactive graphics stream. The video stream represents a main video and a sub video of a movie. The audio stream (IG) represents a main audio part of the movie and sub audio to be mixed with the main audio. The presentation graphics stream represents the subtitle of the movie. Here, the main video refers to a video usually displayed on a window, whereas the sub video refers to a video displayed within the main video as a small window. The interactive graphics stream represents a dialog window created by placing GUI components on the window. The video stream is coded using the video coding method or apparatus described in each of the above exemplary embodiments and using the video coding method or apparatus compliant with an existing standard, such as MPEG-2, MPEG-4 AVC, or VC-1. The audio stream is coded using a standard, such as Dolby AC-3 (Audio Code number 3), Dolby Digital Plus, MLP (Meridian Lossless Packing), DTS (Digital Theater Systems), DTS-HD, or linear PCM (Pulse Code Modulation).

Each stream included in multiplexed data is identified by a PID (Packet Identifier). For example, a video stream to be used as video of a movie is assigned 0x1011. An audio stream is assigned any one of 0x1100 to 0x111F. A presentation graphics stream is assigned any one of 0x1200 to 0x121F. An interactive graphics stream is assigned any one of 0x1400 to 0x141F. A video stream to be used as sub video of the movie is assigned any one of 0x1B00 to 0x1B1F. An audio stream to be used as sub audio to be mixed with main audio is assigned any one of 0x1A00 to 0x1A1F.

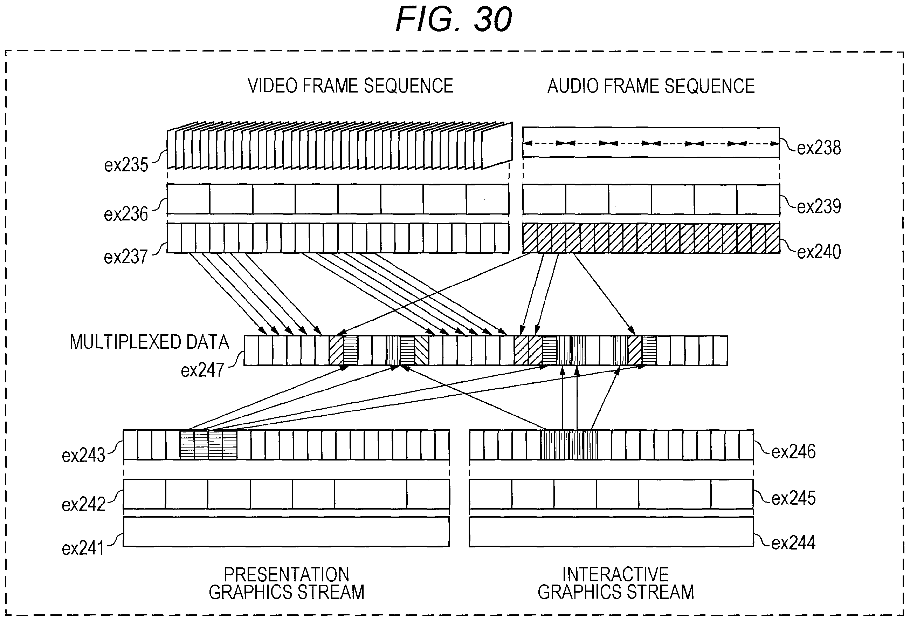

FIG. 30 is a diagram schematically illustrating how individual streams are multiplexed into multiplexed data: Video stream ex235 made up of a plurality of video frames and audio stream ex238 made up of a plurality of audio frames are converted into PES (Packetized Elementary Stream) packet sequences ex236 and ex239, and then into TS (Transport Stream) packets ex237 and ex240, respectively. Likewise, data of presentation graphics stream ex241 and data of interactive graphics stream ex244 are converted into PES packet sequences ex242 and ex245, and further into TS packets ex243 and ex246, respectively. Multiplexed data ex247 is formed by multiplexing these TS packets into one stream.

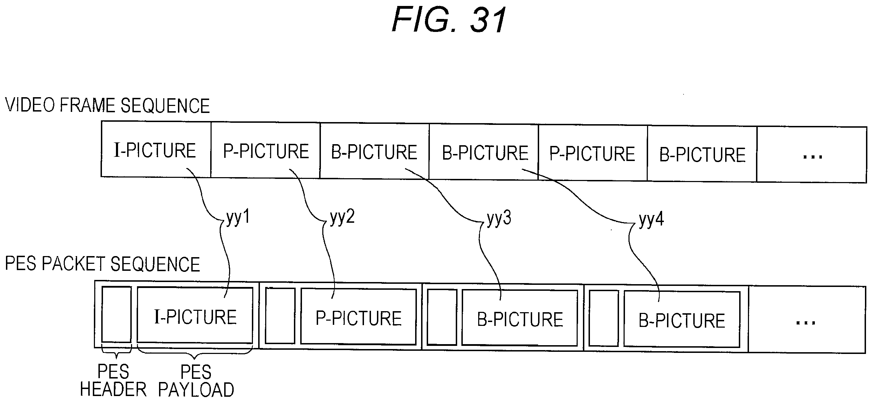

FIG. 31 illustrates how a video stream is stored in a PES packet sequence in detail. The upper row in FIG. 31 illustrates a video frame sequence of the video stream. The lower row illustrates a PES packet sequence. As denoted by arrows yy1, yy2, yy3, and yy4 in FIG. 31, I (intra)-pictures, B (bidirectional)-pictures, and P (predicted)-pictures which are a plurality of video presentation units in a video stream are separated on a picture-by-picture basis, and are stored in the payload of respective PES packets. Each PES packet includes a PES header in which PTS (Presentation Time-Stamp) that represents display time of the picture and DTS (Decoding Time-Stamp) that represents decoding time of the picture are stored.

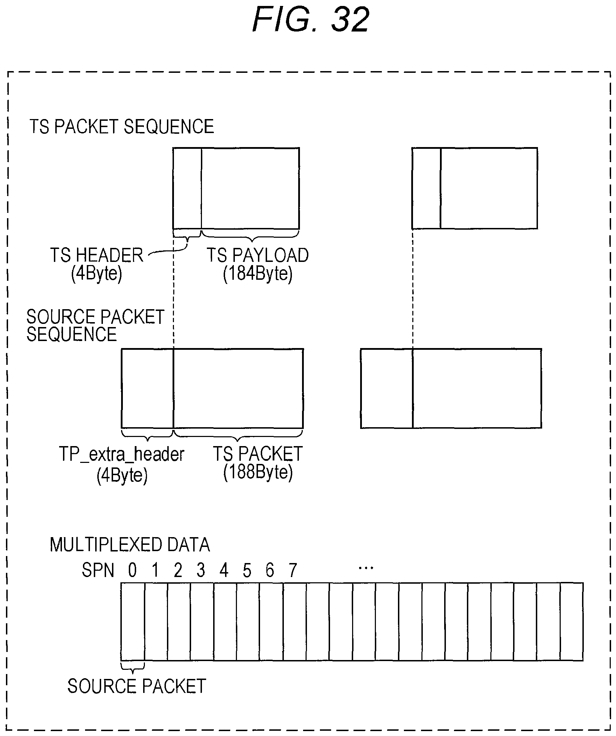

FIG. 32 illustrates the format of TS packets which are ultimately written in multiplexed data. A TS packet is a 188-byte fixed-length packet made up of a 4-byte TS header which includes information such as PID for identifying a stream, and a 184-byte TS payload which stores data. A PES packet is divided into portions, and these portions are stored in respective TS payloads. In the case of BD-ROM, a TS packet is attached with a 4-byte TP_Extra_Header to form a 192-byte source packet, and the source packet is written in the multiplexed data. The TP_Extra_Header includes information such as ATS (Arrival_Time_Stamp). The ATS represents the transfer start time at which transfer of the TS packet to a PID filter of a decoder is to be started. As illustrated by the lowest row in FIG. 32, source packets are arranged in the multiplexed data. The number that is incremented from the start of the multiplexed data is called SPN (Source Packet Number).

TS packets included in the multiplexed data include a PAT (Program Association Table), a PMT (Program Map Table), and a PCR (Program Clock Reference) in addition to individual streams of video, audio, subtitle, and so forth. The PAT represents the PID of the PMT used in the multiplexed data, and 0 is registered as the PID of the PAT. The PMT includes PIDs of individual streams of video, audio, subtitle, and so forth included in the multiplexed data; pieces of attribute information of the streams corresponding to the individual PIDs; and various descriptors regarding the multiplexed data. Examples of the descriptors include copy control information that indicates whether or not copying of the multiplexed data is permitted. The PCR includes information regarding STC (System Time Clock) time corresponding to the ATS at which the PCR packet is transferred to a decoder in order to achieve synchronization between ATC (Arrival Time Clock) which is the time axis for ATS and STC (System Time Clock) which is the time axis for PTS and DTS.

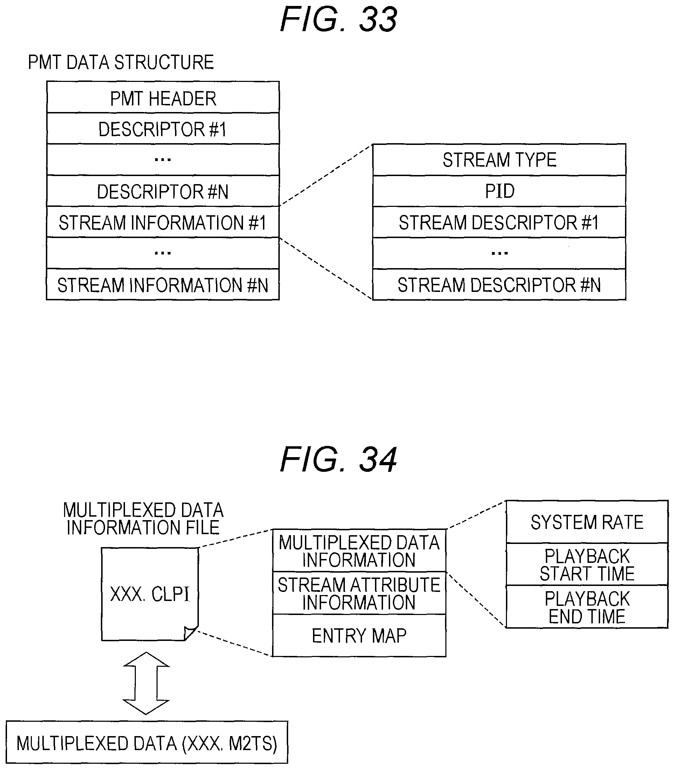

FIG. 33 is a diagram that describes the data structure of the PMT in detail. At the start of the PMT, a PMT header which describes the length of data included in the PMT is placed. The PMT header is followed by a plurality of descriptors regarding the multiplexed data. The copy control information and so forth are described as the descriptors. The descriptors are followed by a plurality of pieces of stream information regarding individual streams included in the multiplexed data. The stream information is made up of a stream type for identifying the compression codec of the stream or the like, the PID of the stream, and stream descriptors that describe the attribute information (such as a frame rate and an aspect ratio) of the stream. The PMT includes as many stream descriptors as the number of streams included in the multiplexed data.

In the case where the multiplexed data is recorded on a recording medium or the like, the multiplexed data is recorded together with a multiplexed data information file.

As illustrated in FIG. 34, a multiplexed data information file (clip information file) contains management information of the multiplexed data, has one-to-one correspondence with the multiplexed data, and is made up of multiplexed data information (clip information), stream attribute information, and an entry map.

The multiplexed data information (clip information) is made up of the system rate, the playback start time, and the playback end time as illustrated in FIG. 34. The system rate represents the maximum transfer rate at which the multiplexed data is transferred to the PID filter of a system target decoder (described later). Intervals of the ATS included in the multiplexed data are set to be lower than or equal to the system rate. The playback start time represents the PTS of the first video frame of the multiplexed data. As the playback end time, a result obtained by adding a playback duration of one frame to the PTS of the last video frame of the multiplexed data is set.

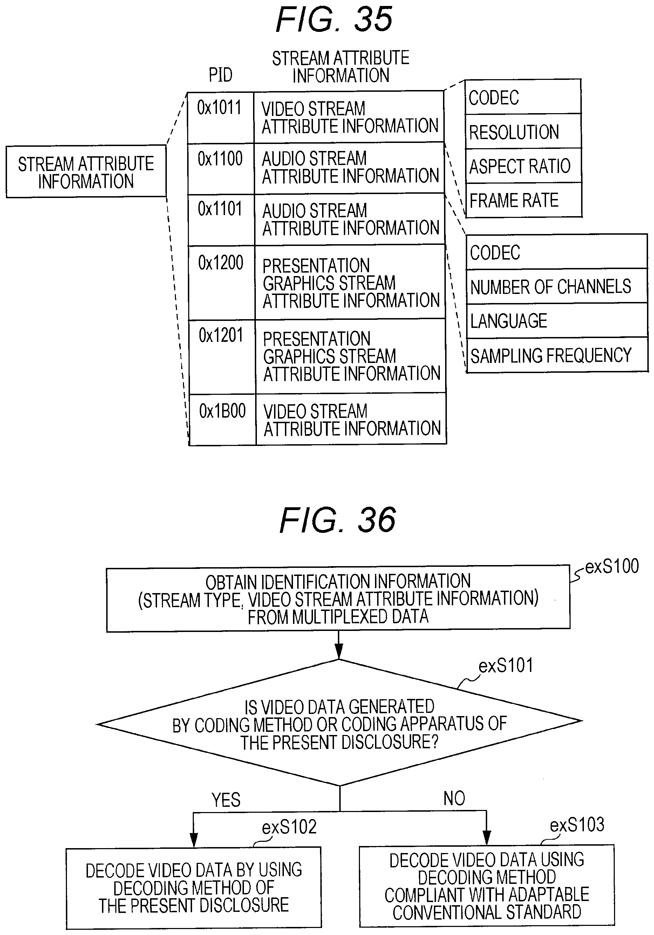

For each PID, attribute information of a corresponding stream included in the multiplexed data is registered in the stream attribute information as illustrated in FIG. 35. The attribute information has different pieces of information for the video stream, the audio stream, the presentation graphics stream, and the interactive graphics stream. Video stream attribute information includes pieces of information such as those regarding a compression codec used to compress the video stream, a resolution of individual picture data of the video stream, an aspect ratio, and a frame rate. Audio stream attribute information includes pieces of information such as those regarding a compression codec used to compress the audio stream, the number of channels included in the audio stream, a supported language, and a sampling frequency. These pieces of information are used in initialization of the decoder before a player performs reproduction, for example.

In the present exemplary embodiment, the stream type contained in the PMT is used among the multiplexed data. Also, in the case where the multiplexed data is recorded on a recording medium, the video stream attribute information contained in the multiplexed data information is used. Specifically, the video coding method or apparatus described in each of the above exemplary embodiments includes a step or unit for setting unique information which indicates whether or not this video data has been generated by the video coding method or apparatus described in each of the above exemplary embodiments, in the stream type contained in the PMT or the video stream attribute information. With this configuration, video data generated using the video coding method or apparatus described in each of the above exemplary embodiments and video data based on another standard can be distinguished from each other.

FIG. 36 illustrates steps included in a video decoding method in accordance with the present exemplary embodiment. In step exS100, the stream type contained in the PMT or the video stream attribute information contained in the multiplexed data information is obtained from the multiplexed data. Then, in step exS101, it is determined whether or not the stream type or the video stream attribute information indicates that this multiplexed data is data that has been generated using the video coding method or apparatus described in each of the above exemplary embodiments. If it is determined from the stream type or the video stream attribute information that this multiplexed data has been generated using the video coding method or apparatus described in each of the above exemplary embodiments, decoding is performed using the video decoding method described in each of the above exemplary embodiments in step exS102. If the stream type or the video stream attribute information indicates that the multiplexed data is based on an existing standard, such as MPEG-2, MPEG-4 AVC, or VC-1, decoding is performed using a video decoding method based on the existing standard in step exS103.

By setting a new unique value in the steam type or the video stream attribute information in this way, it can be determined whether or not decoding can be performed using the video decoding method or apparatus described in each of the above exemplary embodiments at the time of decoding. Accordingly, even in the case where multiplexed data based on a different standard is input, an appropriate decoding method or apparatus can be selected, and thus decoding can be performed without causing an error. Also, the video coding method or apparatus or the video decoding method or apparatus described in the present exemplary embodiment is applicable to any of the aforementioned devices and systems.

### FOURTH EXEMPLARY EMBODIMENT

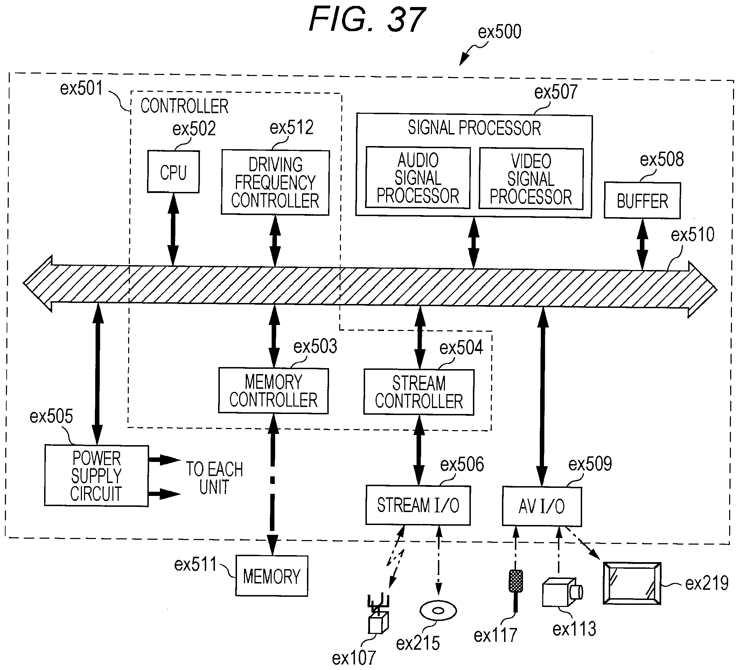

The video coding method and apparatus and the video decoding method and apparatus described in each of the above exemplary embodiments are typically implemented using an LSI which is an integrated circuit. FIG. 37 illustrates an example of a configuration of LSI ex500 which is formed as one chip. LSI ex500 includes controller ex501, CPU ex502, memory controller ex503, stream controller ex504, power supply circuit ex505, stream input/output (I/O) ex506, signal processor ex507, buffer ex508, and audio/video (AV) I/O ex509, which are connected to one another via bus ex510. Upon power-on, power supply circuit ex505 supplies electric power to the individual units to activate the individual units into an operable state.

For example, in the case of performing coding processing, LSI ex500 receives an AV signal from microphone ex117, camera ex113, or the like via AV I/O ex509 in accordance with control performed by controller ex501 which includes CPU ex502, memory controller ex503, stream controller ex504, and driving frequency controller ex512. The input AV signal is temporarily stored in external memory ex511, such as an SDRAM (Synchronous Dynamic Random Access Memory). In accordance with control performed by controller ex501, the stored data is divided into a plurality of portions in accordance with an amount of processing or a processing speed, and the plurality of portions are sent to signal processor ex507. Then, signal processor ex507 codes the audio signal and/or the video signal. The coding processing performed on the video signal here is the coding processing described in each of the above exemplary embodiments. Signal processor ex507 performs processing such as multiplexing of the coded audio data and the coded video data depending on circumstances, and outputs the multiplexed data to outside via stream I/O ex506. This output multiplexed data is transmitted to base station ex107 or written to recording medium ex215. Note that the audio data and the video data may be temporarily stored in buffer ex508 at the time of multiplexing so that these pieces of data are synchronized with each other.

Note that although memory ex511 has been described as a device provided outside LSI ex500 above, memory ex511 may be included in LSI ex500. The number of buffers ex508 is not limited to one and LSI ex500 may include a plurality of buffers. Also, LSI ex500 may be formed as a single chip or a plurality of chips.

Although controller ex501 includes CPU ex502, memory controller ex503, stream controller ex504, and driving frequency controller ex512 above, the configuration of controller ex501 is not limited to this one. For example, signal processor ex507 may further include a CPU. By providing a CPU within signal processor ex507, the processing speed can be further improved. Alternatively, CPU ex502 may include signal processor ex507 or, for example, an audio signal processor which is part of signal processor ex507. In such a case, controller ex501 includes CPU ex502 which includes signal processor ex507 or part of signal processor ex507.

Note that the term "LSI" is used here; however, the configuration may be referred to as an IC, a system LSI, a super LSI, or an ultra LSI depending on the degree of integration.

Also, the circuit integration technique is not limited to LSI, and circuit integration may be implemented using a dedicated circuit or general-purpose processor. An FPGA (Field Programmable Gate Array) that is programmable after manufacturing of an LSI or a reconfigurable processor in which connections and settings of circuit cells within the LSI are reconfigurable may be used. Such a programmable logic device can execute the video coding method or the video decoding method described in each of the above exemplary embodiments typically by loading or reading from a memory or the like a program constituting software or firmware.

Furthermore, if an advance in the semiconductor technology or another related technology yields a circuit integration technology that may substitute for LSI, the functional blocks may be integrated using such a technology obviously. Adaptation of the biotechnology may be possible.

### FIFTH EXEMPLARY EMBODIMENT

It is considered that an amount of processing increases in the case of decoding video data generated using the video coding method or apparatus described in each of the above exemplary embodiments, compared with the case of decoding video data based on an existing standard, such as MPEG-2, MPEG-4 AVC, or VC-1. Accordingly, in LSI ex500, a higher driving frequency needs to be set in CPU ex502 than that used when video data based on an existing standard is decoded. However, making the driving frequency higher undesirably increases power consumption.

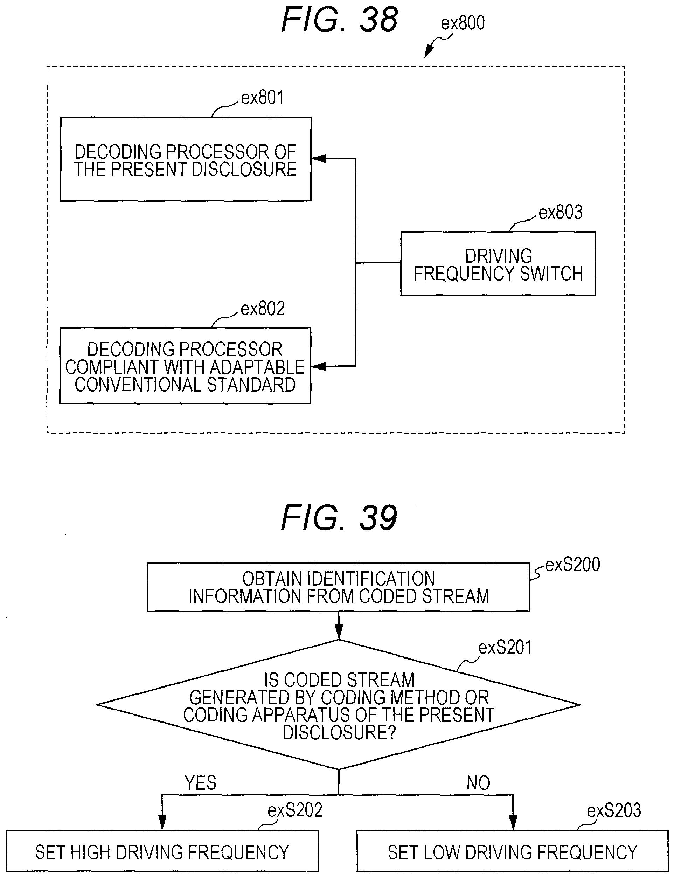

To address this issue, the video decoding apparatus, such as television ex300 or LSI ex500, is configured to identify a standard which video data is based on, and to switch between the driving frequencies in accordance with the standard. FIG. 38 illustrates configuration ex800 in accordance with the present exemplary embodiment. Driving frequency switch ex803 sets the driving frequency high in the case where video data is data that has been generated using the video coding method or apparatus described in each of the above exemplary embodiments. Driving frequency switch ex803 also instructs decoding processor ex801 which executes the video decoding method described in each of the above exemplary embodiments to decode the video data. On the other hand, in the case where the video data is data based on an existing standard, driving frequency switch ex803 sets the driving frequency lower than that of the case where the video data is data that has been generated using the video coding method or apparatus described in each of the above exemplary embodiments. Then, driving frequency switch ex803 instructs decoding processor ex802 compliant with the existing standard to decode the video data.

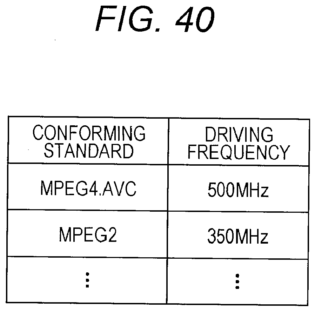

More specifically, driving frequency switch ex803 includes CPU ex502 and driving frequency controller ex512 illustrated in FIG. 37. Decoding processor ex801 that executes the video decoding method described in each of the above exemplary embodiments and decoding processor ex802 compliant with an existing standard correspond to signal processor ex507 illustrated in FIG. 37. CPU ex502 identifies a standard which video data is based on. Then, based on a signal from CPU ex502, driving frequency controller ex512 sets the driving frequency. Also, based on a signal from CPU ex502, signal processor ex507 decodes the video data. Here, the use of the identification information described in the third exemplary embodiment, for example, in identification of the video data is conceivable. The identification information is not limited to the one described in the third exemplary embodiment and may be any type of information with which a standard which the video data is based on is identifiable. For example, in the case where a standard which video data is based on is identifiable on the basis of an external signal that identifies whether the video data is used for the television or for a disc, the identification can be made on the basis of such an external signal. It is also conceivable to select the driving frequency of CPU ex502 in accordance with a lookup table in which the standard for the video data and the driving frequency are associated with each other as illustrated in FIG. 40, for example. The lookup table is stored in buffer ex508 or an internal memory of LSI ex500, and CPU ex502 refers to this lookup table. In this way, the driving frequency can be selected.

FIG. 39 illustrates steps for performing the method according to the present exemplary embodiment. First, in step exS200, signal processor ex507 obtains identification information from multiplexed data. Then, in step exS201, based on the identification information, CPU ex502 identifies whether or not video data is video data that has been generated using the video coding method or apparatus described in each of the above exemplary embodiments. If the video data is video data that has been generated using the video coding method or apparatus described in each of the above exemplary embodiments, CPU ex502 sends a signal for setting a high driving frequency to driving frequency controller ex512 in step exS202. Then, driving frequency controller ex512 sets a high driving frequency. On the other hand, if the identification information indicates that the video data is video data based on an existing standard, such as MPEG-2, MPEG-4 AVC, or VC-1, CPU ex502 sends a signal for setting a low driving frequency to driving frequency controller ex512 in step exS203. Then, driving frequency controller ex512 sets a lower driving frequency than that used when the video data is video data that has been generated using the video coding method or apparatus described in each of the above exemplary embodiments.

Further, by changing a voltage supplied to LSI ex500 or an apparatus including LSI ex500 in conjunction with switching of the driving frequency, the power-saving effect can be further increased. For example, it is conceivable that in the case where a low driving frequency is set, a voltage supplied to LSI ex500 or an apparatus including LSI ex500 is set to be lower in response to this setting than that of the case where a high driving frequency is set.

It is sufficient that the driving frequency is set to be higher in the case where an amount of decoding processing is large and set to be lower in the case where an amount of decoding processing is small. Accordingly, the driving frequency setting method is not limited to the above-described setting method. For example, in the case where an amount of processing for decoding video data based on the MPEG-4 AVC standard is larger than an amount of processing for decoding video data generated using the video coding method or apparatus described in each of the above exemplary embodiments, settings of the driving frequency can be made opposite to the settings of the above-described case.

Further, the driving frequency setting method is not limited to a configuration for setting the driving frequency low. For example, in the case where the identification information indicates that the video data is video data that has been generated using the video coding method or apparatus described in each of the above exemplary embodiments, a voltage supplied to LSI ex500 or an apparatus including LSI ex500 may be set to be high. In the case where the identification information indicates that the video data is video data based on an existing standard, such as MPEG-2, MPEG-4 AVC, or VC-1, a voltage supplied to LSI ex500 or an apparatus including LSI ex500 may be set to be low. Alternatively, in another example, in the case where the identification information indicates that the video data is video data that has been generated using the video coding method or apparatus described in each of the above exemplary embodiments, driving of CPU ex502 is not stopped. In the case where the identification information indicates that the video data is video data based on an existing standard, such as MPEG-2, MPEG-4 AVC, or VC-1, driving of CPU ex502 may be temporarily stopped because there is a surplus of capacity relative to the processing load. When there is a surplus of capacity relative to the processing load in the case where the identification information indicates that the video data is video data that has been generated using the video coding method or apparatus described in each of the above exemplary embodiments, driving of CPU ex502 may be temporarily stopped. In this case, a period over which CPU ex502 is stopped may be set to be shorter than that of the case where the identification information indicates that the video data is video data based on an existing standard, such as MPEG-2, MPEG-4 AVC, or VC-1.

By switching between the driving frequencies in accordance with the standard which the video data is based on in this manner, electric power can be saved. Also, in the case where LSI ex500 or an apparatus including LSI ex500 is driven with a battery, the battery can be made last longer as a result of power-saving.

### SIXTH EXEMPLARY EMBODIMENT

A plurality of pieces of video data based on different standards are sometimes input to the aforementioned devices and systems, such as television ex300 and mobile phone ex114. In order to enable decoding even in the case where a plurality of pieces of video data based on different standards are input, signal processor ex507 of LSI ex500 needs to support the plurality of standards. However, the use of signal processors ex507 for the respective standards undesirably makes the circuit scale of LSI ex500 larger and increases the cost.

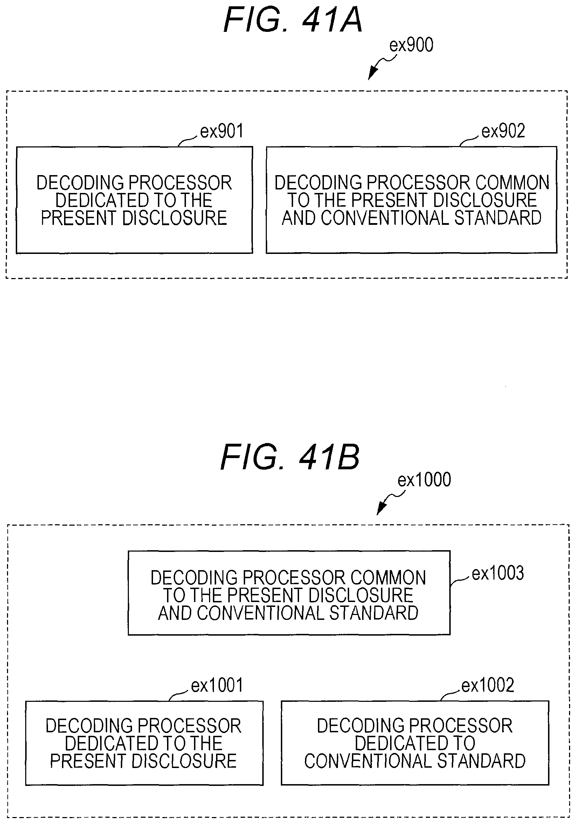

To address this issue, a decoding processor that executes the video decoding method described in each of the above exemplary embodiments and a decoding processor compliant with an existing standard, such as MPEG-2, MPEG-4 AVC, or VC-1, share some of their components. FIG. 41A illustrates an example of this configuration ex900. For example, the video decoding method described in each of the above exemplary embodiments and the video decoding method compliant with the MPEG-4 AVC standard share some of contents of processing, such as entropy decoding, inverse quantization, deblocking filtering, and motion compensation. Accordingly, the following configuration is conceivable. For the shared processing contents, decoding processor ex902 compliant with the MPEG-4 AVC standard in used in common. For other processing contents that are not compliant with the MPEG-4 AVC standard and are unique to an aspect of the present invention, dedicated decoding processor ex901 may be used. Alternatively, as for sharing of the decoding processor, a configuration may be used in which a decoding processor that executes the video decoding method described in each of the above exemplary embodiments is used for the common processing contents and a dedicated decoding processor is used for processing contents unique to the MPEG-4 AVC standard.

FIG. 41 B illustrates another example ex1000 that implements sharing of part of processing. In this example, dedicated decoding processor ex1001 that handles processing contents unique to an aspect of the present invention, dedicated decoding processor ex1002 that handles processing contents unique to an existing standard, and shared decoding processor ex1003 that handles processing contents that are common to the video decoding method according to the aspect of the present invention and the video decoding method according to the existing standard are used. Here, dedicated decoding processors ex1001 and ex1002 are not necessarily specialized for the processing contents unique to the aspect of the present invention and the existing standard, respectively, and may be also capable of executing other general processing. Also, the configuration according to the present exemplary embodiment can be implemented using LSI ex500.

By sharing a decoding processor for processing contents that are common to the video decoding method according to an aspect of the present invention and the video decoding method according to an existing standard, the circuit scale and cost of LSI ex500 can be reduced.

### INDUSTRIAL APPLICABILITY

The coding method and the decoding method of the present invention produces an effect such that the coding efficiency is improved, and are applicable to information display devices and imaging apparatuses such as a television, a digital video recorder, a car navigation, a mobile phone, a digital camera, and a digital video camera.

### REFERENCE MARKS IN THE DRAWINGS

- 100: coding apparatus
- 101: converter
- 102: quantizer
- 103: inverse quantizer
- 104: inverse converter
- 105: block memory
- 106: picture memory
- 107: intra predictor
- 108: inter predictor
- 109: entropy coder
- 110: subtractor
- 111: adder
- 130: controller
- 131: motion vector predictor
- 136: writing unit
- 200: decoding apparatus
- 201: entropy decoder
- 202: inverse quantizer
- 203: inverse converter
- 204: block memory
- 205: picture memory
- 206: intra predictor
- 207: inter predictor
- 210: motion vector predictor
- 212: controller
- 213: decipher unit
- 215: adder

## Claims

1. A coding method comprising:
selecting one nearby template from N (N being an integer equal to or greater than 2) nearby templates that are predefined for a current block included in a picture and represent different regions spatially adjacent to the current block;
deriving a motion vector using (i) a reconstructed image in a region represented by the selected nearby template and (ii) a reference picture different from the picture;
compensating a motion for the current block using the derived motion vector to code the current block; and
writing a DMVD (Decoder-side Motion Vector Derivation) parameter representing whether a DMVD function that derives the motion vector in a decoder is enabled into a bit stream including the coded current block.

2. The coding method according to claim 1, further comprising:
identifying the N nearby templates predefined for the current block, wherein
in the selection of the nearby template, the nearby template is selected from the identified N nearby templates;
in the writing of the DMVD parameter, an identification parameter for identifying the selected nearby template is written as the DMVD parameter that represents that the DMVD function is enabled.

3. The coding method according to claim 1, further comprising:
determining which subset is selected from a plurality of subsets each of which is formed by the plurality of nearby templates whose number is less than N or whether no subset is used; and
writing an extension parameter representing a determined result of the subset as a value into the bit stream,
wherein in the selection of the nearby template,
(a) when the extension parameter indicates a predetermined value,
a subset according to the extension parameter is specified from the plurality of subsets, and
one nearby template is selected from M (M being an integer equal to or greater than 2 and smaller than N) nearby templates, included in the specified subset, in the N nearby templates, and
(b) when the extension parameter does not indicate the predetermined value, one nearby template is selected from the N nearby templates.

4. The coding method according to claim 1, further comprising determining whether the nearby template is adaptively changed,
wherein in the writing of the DMVD parameter, a parameter indicating a result of determining whether the change is made as a value is written as the DMVD parameter,
in the selection of the nearby template, when the DMVD parameter indicates a predetermined value, one nearby template is selected from the N nearby templates according to a region of a reconstructed image generated around the current block at a time of coding the current block.

5. The coding method according to claim 2, wherein in the selection of the nearby template,
priorities are determined for a plurality of nearby templates to be candidates in the N nearby templates, and
a nearby template with the highest priority in the plurality of nearby templates to be candidates is selected from at least one nearby template where all reconstructed images in a region represented by the nearby template are generated at a time of coding the current block.

6. The coding method according to claim 2, wherein in the selection of the nearby template,
a degree of a distortion between an image represented by a motion vector to be derived for the nearby template and an image of the nearby template is calculated as a distortion value for the plurality of nearby templates to be candidates in the N nearby templates, and
a nearby template whose distortion value is smallest is selected from the plurality of nearby templates to be candidates.

7. The coding method according to claim 1, wherein in the writing of the DMVD parameter, a value that represents whether the DMVD function is enabled is written as the DMVD parameter according to whether the value is larger than a predetermined threshold.

8. A decoding method comprising:
parsing a DMVD (Decoder-side Motion Vector Derivation) parameter representing whether a DMVD function for deriving a motion vector in a decoder is enabled from a bit stream including a coded picture;
selecting one nearby template from N (N being an integer equal to or greater than 2) nearby templates that are predefined for a current block included in the coded picture and represent different regions spatially adjacent to the current block based on the parsed DMVD parameter;
deriving a motion vector using (i) a reconstructed image in the region represented by the selected nearby template and (ii) a reference picture different from the coded picture; and
compensating a motion for the current block using the derived motion vector to decode the current block.

9. The decoding method according to claim 8, further comprising identifying the N nearby templates that are predefined for the current block,
wherein in the parsing of the DMVD parameter, the identification parameter for identifying the nearby template to be selected is parsed as the DMVD parameter that represents that the DMVD function is enabled, and
in the selection of the nearby template, the nearby template according to the identification parameter is selected from the identified N nearby templates.

10. The decoding method according to claim 8, further comprising parsing, from the bit stream, an extension parameter that represents which subset is selected from a plurality of subsets each of which is formed by the plurality of nearby templates whose number is less than N or whether no subset is used as a value,
wherein in the selection of the nearby template,
(a) when the extension parameter indicates a predetermined value,
a subset according to the extension parameter is specified from the plurality of subsets, and
one nearby template is selected from M (M being an integer equal to or greater than 2 and smaller than N) nearby templates, included in the specified subset, in the N nearby templates, and
(b) when the extension parameter does not indicate the predetermined value, one nearby template is selected from the N nearby templates.

11. The decoding method according to claim 8, wherein
in the parsing of the DMVD parameter, the parameter that represents whether the nearby template is adaptively changed as a value is parsed as the DMVD parameter,
in the selection of the nearby template, when the DMVD parameter indicates a predetermined value, one nearby template is selected from the N nearby templates according to a region of a reconstructed image generated around the current block at a time of decoding the current block.

12. The decoding method according to claim 10, wherein
in the selection of the nearby template,
priorities are determined for a plurality of nearby templates to be candidates in the N nearby templates, and
a nearby template with the highest priority in the plurality of nearby templates to be candidates is selected from at least one nearby template where all reconstructed images in the region represented by the nearby template are generated at a time of decoding the current block.

13. The decoding method according to claim 10, wherein
in the selection of the nearby template,
a degree of a distortion between an image represented by a motion vector to be derived for the nearby template and an image of the nearby template is calculated as a distortion value for the plurality of nearby templates to be candidates in the N nearby templates, and
a nearby template whose distortion value is smallest is selected from the plurality of nearby templates to be candidates.

14. The decoding method according to claim 8, wherein in the parsing of the DMVD parameter, a value that represents whether the DMVD function is enabled is parsed as the DMVD parameter according to whether the value is larger than a predetermined threshold.

15. A coding apparatus comprising:
selector configured to select one nearby template from N (N being an integer equal to or greater than 2) nearby templates that are predefined for a current block included in a picture and represent different regions spatially adjacent to the current block;
deriving unit configured to derive a motion vector using (i) a reconstructed image in a region represented by the selected nearby template and (ii) a reference picture different from the picture;
compensating unit configured to compensated a motion for the current block using the derived motion vector to code the current block; and
writing unit configured to write a DMVD (Decoder-side Motion Vector Derivation) parameter representing whether a DMVD function that derives the motion vector in a decoder is enabled into a bit stream including the coded current block.

16. A decoding apparatus comprising:
parsing unit configured to parse a DMVD (Decoder-side Motion Vector Derivation) parameter representing whether a DMVD function for deriving a motion vector is enabled from a bit stream including a coded picture;
selector configured to select one nearby template from N (N being an integer equal to or greater than 2) nearby templates that are predefined for a current block included in the coded picture and represent different regions spatially adjacent to the current block based on the deciphered DMVD parameter;
deriving unit configured to derive a motion vector using (i) a reconstructed image in the region represented by the selected nearby template and (ii) a reference picture different from the coded picture; and
compensating unit configured to compensate a motion for the current block using the derived motion vector to decode the current block.
